# EUROPEAN PATENT APPLICATION

(11) **EP 4 625 123 A1**
(43) Date of publication of application: **01.10.2025**
(21) Application number: 23905867.0
(22) Date of filing: 18.12.2023
(51) Int. Cl.: G06F 3/041

(54) **TOUCH-CONTROL PANEL, DISPLAY SCREEN, AND ELECTRONIC DEVICE**

(30) Priority: 22.12.2022 CN 202211656844
(71) Applicant: Huawei Technologies Co., Ltd., Shenzhen, Guangdong 518129 (CN)
(72) Inventor: CHEN, Zesheng, Shenzhen, Guangdong 518129 (CN); ZHANG, Junyong, Shenzhen, Guangdong 518129 (CN); WU, Dongping, Shenzhen, Guangdong 518129 (CN); DENG, Kaifeng, Shenzhen, Guangdong 518129 (CN); MO, Jiabao, Shenzhen, Guangdong 518129 (CN)
(74) Representative: Epping - Hermann - Fischer
(86) International application number: PCT/CN2023/139390
(87) International publication number: WO 2024/131703

(57) **Abstract**

A touch panel (10), a display, and an electronic device are provided. The touch panel (10) includes a touch region (A) and a trace region (B). A plurality of touch channels (A1, A2, A3, ..., and An) that are spaced from each other and that extend in a first direction are disposed in the touch region (A), and the plurality of touch channels (A1, A2, A3, ..., and An) include a first touch channel (A1) and a second touch channel (A2) that are adjacent to each other. The first touch channel (A1) includes a first electrode (TX11), and the second touch channel (A2) includes a second electrode (TX21). A first-end trace (TX11_trace1) and a second-end trace (TX11_trace2) of the first electrode (TX11) and a first-end trace (TX21_trace1) of the second electrode (TX21) are disposed in the trace region (B). A projection of the first-end trace (TX21_trace 1) of the second electrode (TX21) in the first direction does not overlap a projection of the first-end trace (TX11_trace1) of the first electrode (TX11) in the first direction, but overlaps a projection of the second-end trace (TX11_trace2) of the first electrode (TX11) in the first direction, and a projection of the second-end trace (TX11_trace2) of the first electrode (TX11) on the first-end trace (TX21_trace1) of the second electrode (TX21) overlaps the first-end trace (TX21_trace1) of the second electrode (TX21). This application can improve accuracy of drawing a line with a capacitive stylus.

## Description

This application claims priority to Chinese Patent Application No. 202211656844.2, filed with China National Intellectual Property Administration on December 22, 2022, and entitled "TOUCH PANEL, DISPLAY, AND ELECTRONIC DEVICE", which is incorporated herein by reference in its entirety.

### TECHNICAL FIELD

This application relates to the field of electronic information technologies, and in particular, to a touch panel, a display, and an electronic device.

### BACKGROUND

As medium- and small-sized display devices such as a mobile phone and a tablet computer have increasingly high requirements on lightness and thinness and better interaction experience, users are no longer satisfied with only a manner of interacting with the display device by using a finger, and requirements for a stylus are also increasing.

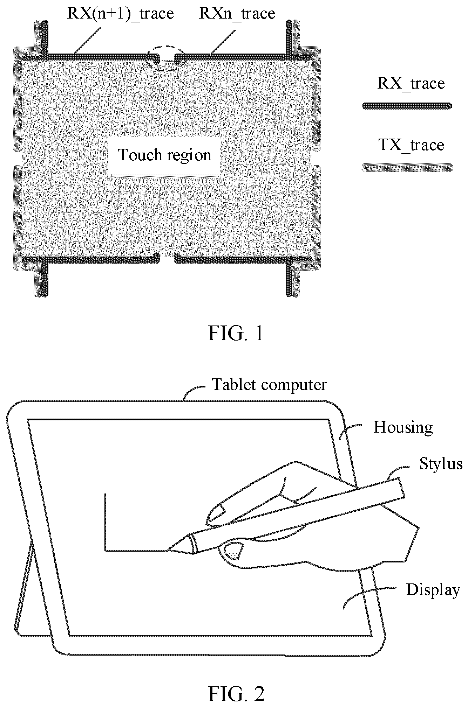

Currently, for a capacitive stylus, it is very important whether a signal transmitted by the stylus can be evenly transferred through a touch trace of a touch panel in a display device. Therefore, a touch trace design of the touch panel is an important factor that affects accuracy of drawing a line with the stylus. In an existing touch trace design, a manner in which traces of electrodes of a same type are led out from different locations is mainly used. For example, in a diagram of a planar structure of a touch panel shown in FIG. 1, a light gray rectangular region serves as a touch region, and dark gray lines RX_trace and black lines TX_trace that are located outside the touch region and that are along an edge of the touch region respectively represent traces of transmit electrodes and traces of receive electrodes. The receive electrodes RX(n-1), RXn, RX(n+1), and RX(n+2) are respectively located in four adjacent touch channels in the touch region. Because the traces of the receive electrodes are led out from the touch region, it may be learned that a direction of a trace RXn_trace of the receive electrode RXn and a direction of a trace RX(n+1)_trace of the receive electrode RX(n+1) are respectively rightward and leftward, a direction of a trace RX(n-1)_trace of the receive electrode RX(n-1) is the same as the direction of the trace RXn_trace of the receive electrode RXn, and a direction of a trace RX(n+2) of the receive electrode RX(n+2) is the same as the direction of the trace RX(n+1)_trace of the receive electrode RX(n+1).

Due to the foregoing trace manner, a trace signal environment between the electrode RXn and the trace RXn_trace of the electrode RXn and the electrode RX(n+1) and the trace RX(n+1)_trace of the electrode RX(n+1) is different from a trace signal environment between the electrode RX(n-1) and the trace RX(n-1)_trace of the electrode RX(n-1) and the electrode RXn and the trace RXn_trace of the electrode RXn, and is also different from a trace signal environment between the electrode RX(n+1) and the trace RX(n+1)_trace of the electrode RX(n+1) and the electrode RX(n+2) and the trace RX(n+2)_trace of the electrode RX(n+2). In this case, when an overall signal-to-noise ratio is low, jitter is generated in an elliptical dashed-line region shown in FIG. 1 when drawing a line with the capacitive stylus, reducing accuracy of drawing a line with the capacitive stylus.

### SUMMARY

This application provides a touch panel, a display, and an electronic device, to improve accuracy of drawing a line with a capacitive stylus, thereby improving user experience of using the capacitive stylus by a user.

According to a first aspect, an embodiment of this application provides a touch panel. The touch panel includes a touch region and a trace region that is located outside the touch region and that is disposed along an edge of the touch region. A plurality of touch channels that are spaced from each other and that extend in a first direction are disposed in the touch region, and the plurality of touch channels include a first touch channel and a second touch channel that are adjacent to each other. The first touch channel includes a first electrode, the second touch channel includes a second electrode, and the first electrode and the second electrode are electrodes of a same type. A first-end trace and a second-end trace of the first electrode and a first-end trace of the second electrode are disposed in the trace region. Both the first-end trace of the first electrode and the first-end trace of the second electrode are configured to connect to a controller of the touch panel. A part of the first-end trace of the first electrode is parallel to a part of the first-end trace of the second electrode, a projection of the first-end trace of the first electrode in the first direction does not overlap a projection of the first-end trace of the second electrode in the first direction, a part of the second-end trace of the first electrode is parallel to a part of the first-end trace of the second electrode, a projection of the second-end trace of the first electrode in the first direction overlaps the projection of the first-end trace of the second electrode in the first direction, and a projection of the second-end trace of the first electrode on the first-end trace of the second electrode overlaps the first-end trace of the second electrode.

It may be understood that a capacitance value between the trace of the first electrode and the first-end trace of the second electrode is increased by adding the second-end trace of the first electrode whose projection on the first-end trace of the second electrode overlaps the first-end trace of the second electrode in the trace region, that is, compensating for capacitance between the traces, to resolve a jitter problem caused, when a capacitive stylus is used to draw a line on the touch panel, by a routing manner in which directions of first-end traces of two electrodes of a same type in two adjacent touch channels are opposite, thereby improving accuracy of drawing a line with the capacitive stylus, and improving user experience of using the capacitive stylus by a user.

With reference to the first aspect, in a first possible implementation, a vertical projection of the second-end trace of the first electrode on a bottom surface of the touch panel does not overlap a vertical projection of the first-end trace of the second electrode on the bottom surface of the touch panel. For example, the second-end trace of the first electrode may be located on a left side (including a just left side, an upper left side, and a lower left side) or a right side (including a just right side, an upper right side, and a lower right side) of the first-end trace of the second electrode. The second-end trace of the first electrode has various locations and high flexibility.

With reference to the first aspect, in a second possible implementation, a vertical projection of the second-end trace of the first electrode on a bottom surface of the touch panel overlaps a vertical projection of the first-end trace of the second electrode on the bottom surface of the touch panel. It may be understood that, in a direction perpendicular to the bottom surface of the touch panel, the second-end trace of the first electrode may be located above or below the first-end trace of the second electrode. The second-end trace of the first electrode has various locations and high flexibility.

With reference to any one of the first aspect to the second possible implementation of the first aspect, in a third possible implementation, the plurality of touch channels are all located on a same plane parallel to the bottom surface of the touch panel, the plurality of touch channels further include a third touch channel, the third touch channel is adjacent to the second touch channel, and a first channel spacing between the first touch channel and the second touch channel is less than a second channel spacing between the second touch channel and the third touch channel.

It may be understood that, in this implementation, both the capacitance between the trace of the first electrode and the first-end trace of the second electrode and a capacitance value between the first electrode and the second electrode are increased by compensating for the capacitance between the traces and shortening the first channel spacing, to resolve the jitter problem caused, when the capacitive stylus is used to draw a line on the touch panel, by the routing manner in which the directions of the first-end traces of the two electrodes of the same type in the two adjacent touch channels are opposite, thereby improving the accuracy of drawing the line with the capacitive stylus, and improving user experience of using the capacitive stylus by the user. In addition, the touch panel has various structures and high flexibility.

With reference to any one of the first aspect to the second possible implementation of the first aspect, in a fourth possible implementation, there is an overlapping region between a vertical projection of the first touch channel on the bottom surface of the touch panel and a vertical projection of the second touch channel on the bottom surface of the touch panel.

It may be understood that, in this implementation, both the capacitance between the trace of the first electrode and the first-end trace of the second electrode and a capacitance value between the first electrode and the second electrode are increased by compensating for the capacitance between the traces and increasing an orthogonal projection area between the channels, to resolve the jitter problem caused, when the capacitive stylus is used to draw a line on the touch panel, by the routing manner in which the directions of the first-end traces of the two electrodes of the same type in the two adjacent touch channels are opposite, thereby improving the accuracy of drawing the line with the capacitive stylus, and improving user experience of using the capacitive stylus by the user. In addition, the touch panel has various structures and high flexibility.

With reference to any one of the first aspect to the fourth possible implementation of the first aspect, in a fifth possible implementation, the plurality of touch channels further include the third touch channel, and the third touch channel is adjacent to the second touch channel. The third touch channel includes a third electrode, and the third electrode and the second electrode are electrodes of a same type. A first-end trace of the third electrode is further disposed in the trace region, the first-end trace of the third electrode is configured to connect to the controller, a part of the first-end trace of the third electrode is parallel to a part of the first-end trace of the second electrode, and a projection of the first-end trace of the third electrode in the first direction overlaps the projection of the first-end trace of the second electrode in the first direction. A length of a part, overlapping the first-end trace of the second electrode, of the projection of the second-end trace of the first electrode on the first-end trace of the second electrode is determined by a capacitance value between the first-end trace of the third electrode and the first-end trace of the second electrode.

It may be understood that a capacitance value between the first electrode and the trace of the first electrode and the second electrode and the first-end trace of the second electrode may be equal to a capacitance value between the second electrode and the first-end trace of the second electrode and the third electrode and the first-end trace of the third electrode by adjusting a length of the overlapping traces, to resolve the jitter problem caused, when the capacitive stylus is used to draw a line on the touch panel, by the routing manner in which the directions of the first-end traces of the two electrodes of the same type in the two adjacent touch channels are opposite, thereby improving the accuracy of drawing the line with the capacitive stylus, and improving user experience of using the capacitive stylus by the user.

With reference to any one of the first aspect to the fifth possible implementation of the first aspect, in a sixth possible implementation, the second-end trace of the first electrode is a single-layer trace or a double-layer trace. It may be understood that the touch panel is applicable to both an application scenario with a single-layer trace and an application scenario with a double-layer trace, and has high applicability.

According to a second aspect, an embodiment of this application provides a touch panel. The touch panel includes a touch region and a trace region that is located outside the touch region and that is disposed along an edge of the touch region. A plurality of touch channels that are spaced from each other and located on a same plane parallel to a bottom surface of the touch panel and that extend in a first direction are disposed in the touch region. The plurality of touch channels include a first touch channel, a second touch channel, and a third touch channel, and both the first touch channel and the third touch channel are adjacent to the second touch channel. The first touch channel includes a first electrode, the second touch channel includes a second electrode, and the first electrode and the second electrode are electrodes of a same type. A first-end trace of the first electrode and a first-end trace of the second electrode are disposed in the trace region, both the first-end trace of the first electrode and the first-end trace of the second electrode are configured to connect to a controller of the touch panel, a part of the first-end trace of the first electrode is parallel to a part of the first-end trace of the second electrode, and a projection of the first-end trace of the first electrode in the first direction does not overlap a projection of the first-end trace of the second electrode in the first direction. A first channel spacing between the first touch channel and the second touch channel is less than a second channel spacing between the second touch channel and the third touch channel.

It may be understood that an electrode spacing between the first electrode and the second electrode is shortened by shortening the first channel spacing, so that a capacitance value between the first electrode and the second electrode is increased, to resolve a jitter problem caused, when a capacitive stylus is used to draw a line on the touch panel, by a routing manner in which directions of first-end traces of two electrodes of a same type in two adjacent touch channels are opposite, thereby improving accuracy of drawing a line with the capacitive stylus, and improving user experience of using the capacitive stylus by a user.

With reference to the second aspect, in a first possible implementation, the trace region further includes a second-end trace of the first electrode, a part of the second-end trace of the first electrode is parallel to a part of the first-end trace of the second electrode, a projection of the second-end trace of the first electrode in the first direction overlaps the projection of the first-end trace of the second electrode in the first direction, and a projection of the second-end trace of the first electrode on the first-end trace of the second electrode overlaps the first-end trace of the second electrode.

It may be understood that, in this implementation, both capacitance between the trace of the first electrode and the first-end trace of the second electrode and the capacitance value between the first electrode and the second electrode are increased through shortening the first channel spacing and compensating for the capacitance between the traces, to resolve the jitter problem caused, when the capacitive stylus is used to draw a line on the touch panel, by the routing manner in which the directions of the first-end traces of the two electrodes of the same type in the two adjacent touch channels are opposite, thereby improving the accuracy of drawing the line with the capacitive stylus, and improving user experience of using the capacitive stylus by the user. In addition, the touch panel has various structures and high flexibility.

With reference to the first possible implementation of the second aspect, in a second possible implementation, a vertical projection of the second-end trace of the first electrode on the bottom surface of the touch panel does not overlap a vertical projection of the first-end trace of the second electrode on the bottom surface of the touch panel.

With reference to the first possible implementation of the second aspect, in a third possible implementation, a vertical projection of the second-end trace of the first electrode on the bottom surface of the touch panel overlaps a vertical projection of the first-end trace of the second electrode on the bottom surface of the touch panel.

With reference to any one of the second aspect to the third possible implementation of the second aspect, in a fourth possible implementation, the third touch channel includes a third electrode, and the third electrode and the second electrode are electrodes of a same type. A first-end trace of the third electrode is further disposed in the trace region, the first-end trace of the third electrode is configured to connect to the controller, a part of the first-end trace of the third electrode is parallel to a part of the first-end trace of the second electrode, and a projection of the first-end trace of the third electrode in the first direction overlaps the projection of the first-end trace of the second electrode in the first direction. The first channel spacing is determined by a capacitance value between the first-end trace of the third electrode and the first-end trace of the second electrode. It may be understood that a capacitance value between the first-end trace of the first electrode and the first-end trace of the second electrode may be correspondingly compensated by adjusting a size of the first channel spacing, so that flexibility is high.

According to a third aspect, an embodiment of this application provides a touch panel. The touch panel includes a touch region and a trace region that is located outside the touch region and that is disposed along an edge of the touch region. A plurality of touch channels that are spaced from each other and that extend in a first direction are disposed in the touch region, and the plurality of touch channels include a first touch channel and a second touch channel that are adjacent to each other. The first touch channel includes a first electrode, the second touch channel includes a second electrode, and the first electrode and the second electrode are electrodes of a same type. A first-end trace of the first electrode and a first-end trace of the second electrode are disposed in the trace region, both the first-end trace of the first electrode and the first-end trace of the second electrode are configured to connect to a controller of the touch panel, a part of the first-end trace of the first electrode is parallel to a part of the first-end trace of the second electrode, and a projection of the first-end trace of the first electrode in the first direction does not overlap a projection of the first-end trace of the second electrode in the first direction. There is an overlapping region between a vertical projection of the first touch channel on a bottom surface of the touch panel and a vertical projection of the second touch channel on the bottom surface of the touch panel.

It may be understood that an orthogonal projection area between the first electrode and the second electrode is increased by increasing an orthogonal projection area between the first touch channel and the second touch channel (referred to as increasing an orthogonal projection area between the channels), so that a capacitance value between the first electrode and the second electrode is increased, to resolve a jitter problem caused, when a capacitive stylus is used to draw a line on the touch panel, by a routing manner in which directions of first-end traces of two electrodes of a same type in two adjacent touch channels are opposite, thereby improving accuracy of drawing a line with the capacitive stylus, and improving user experience of using the capacitive stylus by a user. With reference to the third aspect, in a first possible implementation, the trace region further includes a second-end trace of the first electrode, a part of the second-end trace of the first electrode is parallel to a part of the first-end trace of the second electrode, a projection of the second-end trace of the first electrode in the first direction overlaps the projection of the first-end trace of the second electrode in the first direction, and a projection of the second-end trace of the first electrode on the first-end trace of the second electrode overlaps the first-end trace of the second electrode. It may be understood that, in this implementation, both capacitance between the trace of the first electrode and the first-end trace of the second electrode and the capacitance value between the first electrode and the second electrode are increased through increasing the orthogonal projection area between the channels and compensating for the capacitance between the traces, to resolve the jitter problem caused, when the capacitive stylus is used to draw a line on the touch panel, by the routing manner in which the directions of the first-end traces of the two electrodes of the same type in the two adjacent touch channels are opposite, thereby improving the accuracy of drawing the line with the capacitive stylus, and improving user experience of using the capacitive stylus by the user. In addition, the touch panel has various structures and high flexibility.

With reference to the first possible implementation of the third aspect, in a second possible implementation, a vertical projection of the second-end trace of the first electrode on the bottom surface of the touch panel does not overlap a vertical projection of the first-end trace of the second electrode on the bottom surface of the touch panel.

With reference to the first possible implementation of the third aspect, in a third possible implementation, a vertical projection of the second-end trace of the first electrode on the bottom surface of the touch panel overlaps a vertical projection of the first-end trace of the second electrode on the bottom surface of the touch panel.

With reference to any one of the third aspect to the third possible implementation of the third aspect, in a fourth possible implementation, the plurality of touch channels further include a third touch channel, and the third touch channel is adjacent to the second touch channel. The third touch channel includes a third electrode, and the third electrode and the second electrode are electrodes of a same type. A first-end trace of the third electrode is further disposed in the trace region, the first-end trace of the third electrode is configured to connect to the controller, a part of the first-end trace of the third electrode is parallel to a part of the first-end trace of the second electrode, and a projection of the first-end trace of the third electrode in the first direction overlaps the projection of the first-end trace of the second electrode in the first direction. An area of the overlapping region is determined by a capacitance value between the first-end trace of the second electrode and the first-end trace of the third electrode. It may be understood that a capacitance value between the first-end trace of the first electrode and the first-end trace of the second electrode may be correspondingly compensated by adjusting the area of the overlapping region, so that flexibility is high.

According to a fourth aspect, an embodiment of this application provides a display. The display includes a display panel and the touch panel according to any one of the possible implementations of the first aspect to the third aspect. The touch panel is located above the display panel.

It may be understood that using, for the touch panel in the display, at least one of the following manners: a manner of compensating for capacitance between traces, a manner of shortening a first channel spacing, and a manner of increasing an orthogonal projection area between channels can effectively resolve a jitter problem caused, when a capacitive stylus is used to draw a line on the display, by a routing manner in which directions of first-end traces of two electrodes of a same type in two adjacent touch channels are opposite, thereby improving accuracy of drawing a line with the capacitive stylus, and improving user experience of using the capacitive stylus by a user. According to a fifth aspect, an embodiment of this application provides a display. The display includes a display panel and the touch panel according to any one of the possible implementations of the first aspect to the third aspect. The touch panel is integrated inside the display panel.

It may be understood that using, for the touch panel in the display, at least one of the following manners: a manner of compensating for capacitance between traces, a manner of shortening a first channel spacing, and a manner of increasing an orthogonal projection area between channels can effectively resolve a jitter problem caused, when a capacitive stylus is used to draw a line on the display, by a routing manner in which directions of first-end traces of two electrodes of a same type in two adjacent touch channels are opposite, thereby improving accuracy of drawing a line with the capacitive stylus, and improving user experience of using the capacitive stylus by a user. In addition, the display may use a design manner in which the touch panel is externally mounted on the display panel, or may use a design manner in which the touch panel is embedded in the display panel. The display has various structures and high flexibility.

According to a sixth aspect, an embodiment of this application provides an electronic device. The electronic device includes a stylus, a housing, and the display according to the fourth aspect or the fifth aspect that is connected to the housing. The stylus serves as an input device of the electronic device.

It may be understood that using, for the touch panel in the electronic device, at least one of the following manners: a manner of compensating for capacitance between traces, a manner of shortening a first channel spacing, and a manner of increasing an orthogonal projection area between channels can effectively resolve a jitter problem caused, when a capacitive stylus is used to draw a line on a display of the electronic device, by a routing manner in which directions of first-end traces of two electrodes of a same type in two adjacent touch channels are opposite, thereby improving accuracy of drawing a line with the capacitive stylus, and improving user experience of using the capacitive stylus by a user.

It should be understood that mutual reference may be made to the implementations and beneficial effects of the foregoing aspects of this application.

### BRIEF DESCRIPTION OF DRAWINGS

FIG. 1 is a diagram of a planar structure of a touch panel according to the conventional technology;
FIG. 2 is a diagram of an application scenario of an electronic device according to an embodiment of this application;
FIG. 3 is diagrams of structures of a display according to an embodiment of this application;
FIG. 4 is a diagram of another planar structure of a touch panel according to the conventional technology;
FIG. 5 is a diagram of a planar structure of a touch panel according to an embodiment of this application;
FIG. 6a is a diagram of another planar structure of a touch panel according to an embodiment of this application;
FIG. 6b is a diagram of another planar structure of a touch panel according to an embodiment of this application;
FIG. 7 is diagrams of a sectional structure of a touch panel according to an embodiment of this application;
FIG. 8a is a diagram of another planar structure of a touch panel according to an embodiment of this application;
FIG. 8b is a diagram of another planar structure of a touch panel according to an embodiment of this application;
FIG. 9 is diagrams of another sectional structure of a touch panel according to an embodiment of this application;
FIG. 10 is a diagram of another planar structure of a touch panel according to an embodiment of this application;
FIG. 11 is a diagram of another planar structure of a touch panel according to an embodiment of this application;
FIG. 12 is diagrams of still another sectional structure of a touch panel according to an embodiment of this application;
FIG. 13 is a diagram of another planar structure of a touch panel according to an embodiment of this application; and
FIG. 14 is a diagram of still another planar structure of a touch panel according to an embodiment of this application.

### DESCRIPTION OF EMBODIMENTS

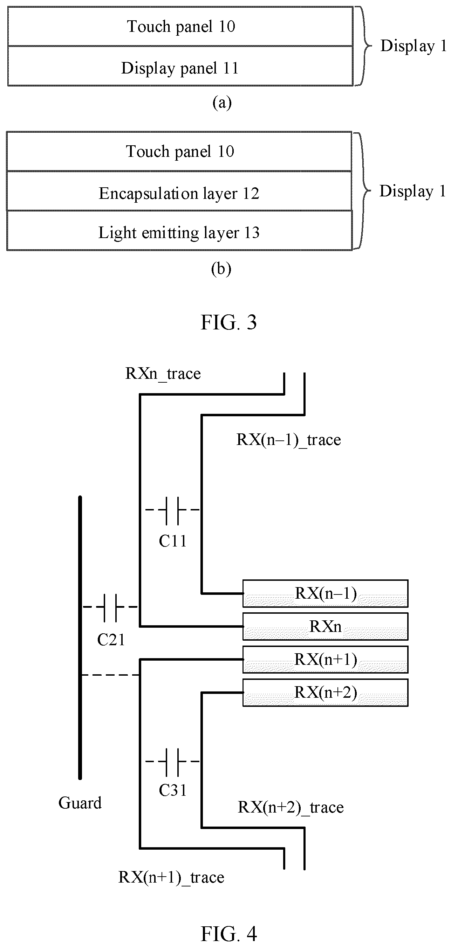

A touch panel, a display, and an electronic device provided in this application are applicable to devices that have a touch panel and support a stylus as an input of the touch panel, such as a smartphone (including a foldable smartphone and a bar-type mobile phone), a tablet computer, a desktop computer, a television, and a printer, and may be applied to the field of electronic devices, the field of automobiles, the field of aerospace, and the like. With reference to FIG. 2 and FIG. 3, the following describes an application scenario of the electronic device by using an example in which the electronic device is a tablet computer.

FIG. 2 is a diagram of an application scenario of an electronic device according to an embodiment of this application. The electronic device provided in this application is applicable to a tablet computer shown in FIG. 2. The tablet computer supports a stylus shown in FIG. 2 as an input device of the tablet computer, and the stylus is a capacitive stylus. The tablet computer includes a display and a housing connected to the display. The display provided in this application may be a display 1 shown in FIG. 3. Specifically, as shown in (a) in FIG. 3, the display 1 includes a touch panel 10 and a display panel 11. The touch panel 10 is located above the display panel 11. It may be learned that the touch panel 10 is externally mounted on the display panel 11 in this embodiment. Optionally, as shown in (b) in FIG. 3, the display 1 includes a touch panel 10, an encapsulation layer 12, and a light emitting layer 13. The touch panel 10 is located above the encapsulation layer 12, the encapsulation layer 12 is located above the light emitting layer 13, and the light emitting layer 13 includes an organic light-emitting diode (Organic Light-Emitting Diode, OLED). In this embodiment, the display 1 is a display panel, and the touch panel 10 is integrated inside the display panel 11, to reduce a thickness of the display 1. It should be noted that the touch panel 10 provided in this application is a touchscreen. In addition, for a specific structure of the touch panel 10 in this embodiment, refer to descriptions in subsequent embodiments. Details are not described herein.

For example, in a process in which a user draws or writes on the touch panel 10 of the tablet computer, the user transfers a voltage signal to an electrode in a touch channel in the touch panel 10 by touching the touch panel 10 with the stylus, so that a magnitude of a voltage signal of a touch channel that is touched is different from a magnitude of a voltage signal of another touch channel. The tablet computer obtains, through calculation based on the voltage signal of each touch channel, coordinates of a location of contact between the stylus and the touch panel 10, and then the tablet computer displays, at the coordinates on the display 1, a track of contact between the stylus and the touch panel 10, that is, a handwriting track of the user.

The following describes, by using examples, a structure and a working principle of the touch panel provided in this application with reference to FIG. 4 to FIG. 14.

For ease of understanding, a reason why, in the diagram of the planar structure of the touch panel shown in FIG. 1, the trace signal environment between the trace RXn_trace and the trace RX(n+1)_trace is different from the trace signal environment between the trace RX(n-1)_trace and the trace RXn_trace, and is also different from the trace signal environment between the trace RX(n+1)_trace and the trace RX(n+2)_trace is first described.

FIG. 4 is a diagram of another planar structure of the touch panel according to the conventional technology. As shown in FIG. 4, for ease of description, capacitance between the trace RX(n-1)_trace and the trace RXn_trace is defined as C11 shown in FIG. 4, capacitance between the trace RXn_trace and the trace RX(n+1)_trace is defined as C21 shown in FIG. 4, and capacitance, which is briefly referred to capacitance between the trace RX(n+1)_trace and the trace RX(n+2)_trace below, formed by the trace RX(n+1)_trace and the trace RX(n+2)_trace through a guard (that is, in a floating ground state) is defined as C31 shown in FIG. 4. It should be noted that, in an actual structure of the touch panel, capacitance C11, C21, and C31 in FIG. 4 does not actually exist, and is merely for ease of description herein. Due to different trace lead-out locations, the trace RXn_trace and the trace RX(n+1)_trace are separated in direction at an edge of the touch region. In other words, a trace lead-out direction of the trace RXn_trace is opposite to a trace lead-out direction of the trace RX(n+1)_trace. As a result, after the trace RXn_trace and the trace RX(n+1)_trace are separated in direction at the edge of the touch region, capacitance values of C11, C21, and C31 are changed from a relationship in which the capacitance values of C11, C21, and C31 are approximately equal to a relationship in which the capacitance value of C21 is far less than that of C11 or C31. Because the electrodes RX(n-1), RXn, RX(n+1), and RX(n+2) are respectively located in the four adjacent touch channels, and channel distances between any two adjacent touch channels are the same, it may be learned that a capacitance value between the electrode RX(n-1) and the electrode RXn, a capacitance value between the electrode RXn and the electrode RX(n+1), and a capacitance value between the electrode RX(n+1) and the electrode RX(n+2) are equal. Therefore, it may be learned that a capacitance value C1 between the electrode RX(n-1) and the trace RX(n-1)_trace of the electrode RX(n-1) and the electrode RXn and the trace RXn_trace of the electrode RXn is approximately equal to a capacitance value C3 between the electrode RX(n+1) and the trace RX(n+1)_trace of the electrode RX(n+1) and the electrode RX(n+2) and the trace RX(n+2)_trace of the electrode RX(n+2), and a capacitance value C2 between the electrode RXn and the trace RXn_trace of the electrode RXn and the electrode RX(n+1) and the trace RX(n+1)_trace of the electrode RX(n+1) is far less than C1 or C3. In other words, the trace signal environment between the electrode RXn and the trace RXn_trace of the electrode RXn and the electrode RX(n+1) and the trace RX(n+1)_trace of the electrode RX(n+1) is different from the trace signal environment between the electrode RX(n-1) and the trace RX(n-1)_trace of the electrode RX(n-1) and the electrode RXn and the trace RXn_trace of the electrode RXn, and is also different from the trace signal environment between the electrode RX(n+1) and the trace RX(n+1)_trace of the electrode RX(n+1) and the electrode RX(n+2) and the trace RX(n+2)_trace of the electrode RX(n+2).

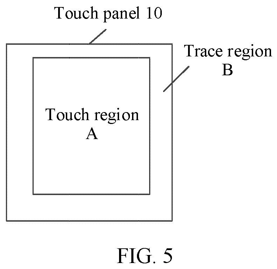

In view of this, in this application, the capacitance value between the electrode RX(n-1) and the electrode RXn is increased or the capacitance value between the electrode RXn and the electrode RX(n+1) is increased, so that C1≈C2≈C3. In this way, the trace signal environment between the electrode RXn and the trace RXn_trace of the electrode RXn and the electrode RX(n+1) and the trace RX(n+1)_trace of the electrode RX(n+1) approximates to the trace signal environment between the electrode RX(n-1) and the trace RX(n-1)_trace of the electrode RX(n-1) and the electrode RXn and the trace RXn_trace of the electrode RXn, and also approximates to the trace signal environment between the electrode RX(n+1) and the trace RX(n+1)_trace of the electrode RX(n+1) and the electrode RX(n+2) and the trace RX(n+2)_trace of the electrode RX(n+2). FIG. 5 is a diagram of a planar structure of a touch panel according to an embodiment of this application. As shown in FIG. 5, a touch panel 10 includes a touch region A and a trace region B that is located outside the touch region A and that is disposed along an edge of the touch region A. A plurality of touch channels that are spaced from each other and that extend in a first direction are disposed in the touch region A. The plurality of touch channels include a first touch channel and a second touch channel that are adjacent to each other. The first touch channel includes a first electrode, the second touch channel includes a second electrode, and the first electrode and the second electrode are electrodes of a same type.

A first-end trace of the first electrode and a first-end trace of the second electrode are disposed in the trace region B, and both the first-end trace of the first electrode and the first-end trace of the second electrode are configured to connect to a controller 101 of the touch panel 10. A part of the first-end trace of the first electrode is parallel to a part of the first-end trace of the second electrode, and a projection of the first-end trace of the first electrode in the first direction does not overlap a projection of the first-end trace of the second electrode in the first direction.

In an optional embodiment, a second-end trace of the first electrode is further disposed in the trace region, a part of the second-end trace of the first electrode is parallel to a part of the first-end trace of the second electrode, a projection of the second-end trace of the first electrode in the first direction overlaps the projection of the first-end trace of the second electrode in the first direction, and a projection of the second-end trace of the first electrode on the first-end trace of the second electrode overlaps the first-end trace of the second electrode.

To facilitate description of beneficial effects of this embodiment of this application, in the following, a third electrode included in a third touch channel in the plurality of touch channels and a first-end trace of the third electrode are led out. The third touch channel is adjacent to the second touch channel, the third touch channel includes the third electrode, and the third electrode and the second electrode are electrodes of a same type. The trace region further includes the first-end trace of the third electrode, the first-end trace of the third electrode is configured to connect to the controller 101, and a part of the first-end trace of the third electrode is parallel to a part of the first-end trace of the second electrode, and a projection of the first-end trace of the third electrode in the first direction overlaps the projection of the first-end trace of the second electrode in the first direction. Herein, the first-end trace of the first electrode, the first-end trace of the second electrode, and the first-end trace of the third electrode respectively correspond to the trace RXn_trace of the electrode RXn, the trace RX(n+1)_trace of the electrode RX(n+1), and the trace RX(n+2)_trace of the electrode RX(n+2) in FIG. 4.

It may be understood that, a capacitance value between the trace of the first electrode and the first-end trace of the second electrode in the touch panel 10 is increased by adding the second-end trace of the first electrode whose projection on the first-end trace of the second electrode overlaps the first-end trace of the second electrode, that is, compensating for capacitance between the traces. In addition, because channel spacings between any two adjacent touch channels in this embodiment are the same, it may be learned that a capacitance value between the first electrode and the trace of the first electrode and the second electrode and the first-end trace of the second electrode is increased and is approximate to a capacitance value between the second electrode and the first-end trace of the second electrode and the third electrode and the first-end trace of the third electrode, to resolve a jitter problem caused, when a user draws a line on the touch panel 10 with a capacitive stylus, by a routing manner in which directions of first-end traces of two electrodes of a same type in two adjacent touch channels are opposite, thereby improving accuracy of drawing a line with the capacitive stylus, and improving user experience of using the capacitive stylus by the user.

In another optional embodiment, the plurality of touch channels are located on a same plane parallel to a bottom surface of the touch panel 10, the plurality of touch channels further include a third touch channel, and the third touch channel is adjacent to the second touch channel. A first channel spacing between the first touch channel and the second touch channel is less than a second channel spacing between the second touch channel and the third touch channel.

It may be understood that an electrode spacing between the first electrode and the second electrode is shortened by shortening the first channel spacing, so that a capacitance value between the first electrode and the second electrode is increased, and a capacitance value between the first electrode and the first-end trace of the first electrode and the second electrode and the first-end trace of the second electrode is approximate to a capacitance value between the second electrode and the first-end trace of the second electrode and the third electrode and the first-end trace of the third electrode, to resolve a jitter problem caused, when a user draws a line on the touch panel 10 with a capacitive stylus, by a routing manner in which directions of first-end traces of two electrodes of a same type in two adjacent touch channels are opposite, thereby improving accuracy of drawing a line with the capacitive stylus, and improving user experience of using the capacitive stylus by the user.

In still another optional embodiment, there is an overlapping region between a vertical projection of the first touch channel on a bottom surface of the touch panel and a vertical projection of the second touch channel on the bottom surface of the touch panel.

It may be understood that an orthogonal projection area between the first electrode and the second electrode is increased by increasing an orthogonal projection area between the channels, so that a capacitance value between the first electrode and the second electrode is increased, and a capacitance value between the first electrode and the first-end trace of the first electrode and the second electrode and the first-end trace of the second electrode is approximate to a capacitance value between the second electrode and the first-end trace of the second electrode and the third electrode and the first-end trace of the third electrode, to resolve a jitter problem caused, when a user draws a line on the touch panel 10 with a capacitive stylus, by a routing manner in which directions of first-end traces of two electrodes of a same type in two adjacent touch channels are opposite, thereby improving accuracy of drawing a line with the capacitive stylus, and improving user experience of using the capacitive stylus by the user.

In conclusion, in this application, the manner of compensating for the capacitance between the traces, the manner of shortening the first channel spacing, or the manner of increasing the orthogonal projection area between the channels may be used, to resolve the jitter problem caused, when the user draws a line on the touch panel 10 with the capacitive stylus, by the routing manner in which the directions of the first-end traces of the two electrodes of the same type in the two adjacent touch channels are opposite, thereby improving the accuracy of drawing the line with the capacitive stylus, and improving user experience of using the capacitive stylus by the user.

It should be noted that, in this application, the trace of the electrode of the touch channel may be led out in a manner of bonding metal. Specifically, in this application, a design in which both ends of the bonding metal are electrically connected to trace channels is used, and there is an adjacent location relationship between the trace channels and trace channels of two electrodes corresponding to two adjacent touch channels. The adjacent location relationship may be left-right, or may be up-down.

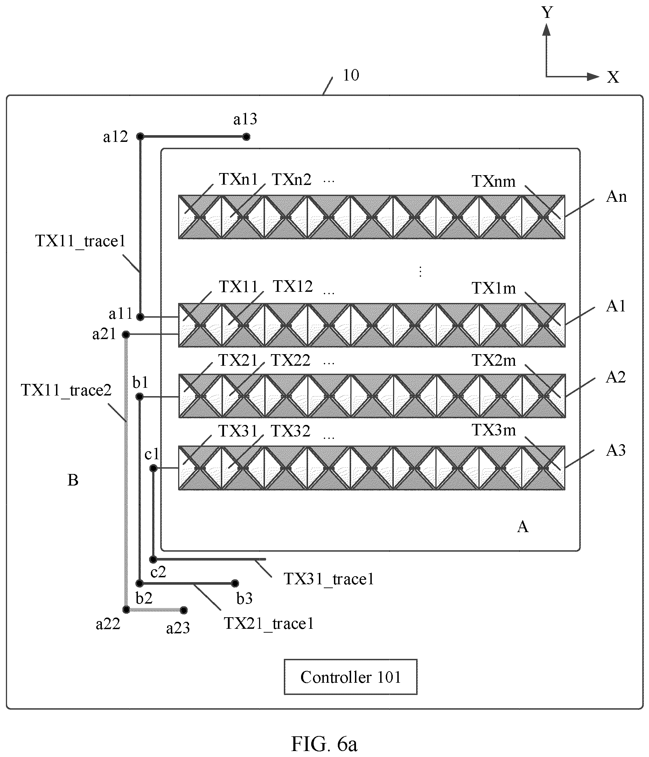

For example, FIG. 6a is a diagram of another planar structure of a touch panel according to an embodiment of this application. As shown in FIG. 6a, a touch panel includes a touch region A and a trace region B that is located outside the touch region A and that is disposed along an edge of the touch region A.

A plurality of touch channels that are spaced from each other and that extend in a first direction X are disposed in the touch region A, namely, a first touch channel A1, a second touch channel A2, a third touch channel A3, ..., and an n^{th} touch channel An. The first touch channel A1 is adjacent to the second touch channel A2, and the second touch channel A2 is adjacent to the third touch channel A3. The first touch channel A1 includes a plurality of first electrodes, for example, a first electrode TX11, a first electrode TX12, ..., and a first electrode TX1m. The second touch channel A2 includes a plurality of second electrodes, for example, a second electrode TX21, a second electrode TX22, ..., and a second electrode TX2m. The third touch channel A3 includes a plurality of third electrodes, for example, a third electrode TX31, a third electrode TX32, ..., and a third electrode TX3m. In other words, the first electrode TX11, the first electrode TX12, ..., and the first electrode TX1m that extend and are distributed in the first direction X form the touch channel A1. The second electrode TX21, the second electrode TX22, ..., and the second electrode TX2m that extend and are distributed in the first direction X form the touch channel A2. By analogy, other (n-2) touch channels extending in the first direction X may be obtained. Each of the first electrode to the third electrode is formed by connecting two white triangular regions via one connection bridge. The first electrode, the second electrode, and the third electrode are electrodes of a same type, and may be transmit electrodes or receive electrodes. In this embodiment, an example in which the first electrode, the second electrode, and the third electrode are all transmit electrodes is used for description.

A first-end trace TX11_trace1 of the first electrode TX11, a first-end trace TX21_trace1 of the second electrode TX21, and a first-end trace TX31_trace1 of the third electrode TX31 that are represented by using black thick lines, and a second-end trace TX11_trace2 of the first electrode TX11 that is represented by using a gray thick line are disposed in the trace region B. The first-end trace TX11_trace1 of the first electrode TX11, the first-end trace TX21_trace1 of the second electrode TX21, and the first-end trace TX31_trace1 of the third electrode TX31 are all configured to connect to a controller 101 of the touch panel 10. The second-end trace TX11_trace2 of the first electrode TX11 is not connected to the controller 101, and is in a suspended state. It should be noted that a location of the controller 101 in the diagram of the planar structure of the touch panel 10 in this application does not represent a specific location of the controller 101 in an actual touch panel. In actual application, the controller 101 is usually disposed in a middle region on the back of the touch panel 10, to facilitate a connection between the electrode trace and the controller 101. In addition, in this application, the touch panel 10 and the display 1 in which the touch panel 10 is located may share a same controller, or may respectively use two controllers that are independent of each other. This is not limited in this application. Optionally, a terminal region may be further disposed in a region between the touch region A and the controller 101, and first-end traces of the electrodes are connected to the controller 101 after being converged in the terminal region.

A vertical projection of the second-end trace TX11_trace2 of the first electrode TX11 on a bottom surface of the touch panel 10 does not overlap a vertical projection of the first-end trace TX21_trace1 of the second electrode TX21 on the bottom surface of the touch panel 10. In this embodiment, the vertical projection of the second-end trace TX11_trace2 of the first electrode TX11 on the bottom surface of the touch panel 10 is located on a left side of the vertical projection of the first-end trace TX21_trace1 of the second electrode TX21 on the bottom surface of the touch panel 10. Specifically, the second-end trace TX11_trace2 of the first electrode TX11 may be located on the just left side, the lower left side, or the upper left side of the first-end trace TX21_trace1 of the second electrode TX21. Optionally, the vertical projection of the second-end trace TX11_trace2 of the first electrode TX11 on the bottom surface of the touch panel 10 is located on a right side of the vertical projection of the first-end trace TX21_trace1 of the second electrode TX21 on the bottom surface of the touch panel 10. Specifically, the second-end trace TX11_trace2 of the first electrode TX11 may be located on the just right side, the upper right side, or the lower right side of the first-end trace TX21_trace1 of the second electrode TX21.

A part of the first-end trace TX11_trace1 of the first electrode TX11 is parallel to a part of the first-end trace TX21_trace1 of the second electrode TX21. For example, a segment a11 to a12 of the first-end trace TX11_trace1 of the first electrode TX11 is parallel to a segment b1 to b2 of the first-end trace TX21_trace1 of the second electrode TX21. In addition, a projection of the first-end trace TX11_trace1 of the first electrode TX11 in the first direction X does not overlap a projection of the first-end trace TX21_trace1 of the second electrode TX21 in the first direction X.

A part of the second-end trace TX11_trace2 of the first electrode TX11 is parallel to a part of the first-end trace TX21_trace1 of the second electrode TX21. For example, a segment a21 to a22 of the second-end trace TX11_trace2 of the first electrode TX11 is parallel to a segment b1 to b2 of the first-end trace TX21_trace1 of the second electrode TX21. A segment a22 to a23 of the second-end trace TX11_trace2 of the first electrode TX11 is parallel to a segment b2 to b3 of the first-end trace TX21_trace1 of the second electrode TX21. In addition, a projection of the second-end trace TX11_trace2 of the first electrode TX11 in the first direction X overlaps a projection of the first-end trace TX21_trace1 of the second electrode TX21 in the first direction X.

A part of the first-end trace TX31_trace1 of the third electrode TX31 is parallel to a part of the first-end trace TX21_trace1 of the second electrode TX21. For example, a segment c1 to c2 of the first-end trace TX31_trace1 of the third electrode TX31 is parallel to a segment b1 to b2 of the first-end trace TX21_trace1 of the second electrode TX21. In addition, a projection of the first-end trace TX3 1_trace1 of the third electrode TX31 in the first direction X overlaps a projection of the first-end trace TX21_trace1 of the second electrode TX21 in the first direction X.

A projection of the second-end trace TX11_trace2 of the first electrode TX11 on the first-end trace TX21_trace1 of the second electrode TX21 overlaps the first-end trace TX21_trace1 of the second electrode TX21. The projection of the second-end trace TX11_trace2 of the first electrode TX11 on the first-end trace TX21_trace1 of the second electrode TX21 is a connection line between two projection points obtained through respective vertical projection of a start point and an end point of the second-end trace TX1 1_trace2 of the first electrode TX11 on the first-end trace TX21_trace1 of the second electrode TX21. It should be noted that, because any-end trace of the electrode may not constantly be in a same direction, the second-end trace TX11_trace2 of the first electrode TX11 may be projected to the first-end trace TX21_trace1 of the second electrode TX21 segment by segment. Specifically, the projection of the second-end trace TX11_trace2 of the first electrode TX11 on the first-end trace TX21_trace1 of the second electrode TX21 includes two projections: a projection of the segment a21 to a22 of the second-end trace TX11_trace2 of the first electrode TX11 on the segment b1 to b2 of the first-end trace TX21_trace1 of the second electrode TX21 and a projection of a segment a22 to a23 of the second-end trace TX11_trace2 of the first electrode TX11 on a segment b2 to b3 of the first-end trace TX21_trace1 of the second electrode TX21.

In addition, in this embodiment, a length of a part, overlapping the first-end trace TX21_trace1 of the second electrode TX21, of the projection of the second-end trace TX11_trace2 of the first electrode TX11 on the first-end trace TX21_trace1 of the second electrode TX21 is positively correlated with a capacitance value between the trace of the first electrode and the first-end trace TX21_trace1 of the second electrode TX21. Based on this, a capacitance value between a part corresponding to the overlapping part of the second-end trace TX11_trace2 of the first electrode and a part corresponding to the overlapping part of the first-end trace TX21_trace1 of the second electrode TX21 may be set to a capacitance value between the first-end trace TX21_trace1 of the second electrode TX21 and the first-end trace TX3 1_ trace1 of the third electrode TX31, so that a capacitance value between the first electrode and the trace of the first electrode and the second electrode and the first-end trace of the second electrode is equal to a capacitance value between the second electrode and the first-end trace of the second electrode and the third electrode and the first-end trace of the third electrode. In this application, both the first-end trace and the second-end trace of the electrode are configured to transmit, to the controller 101, a voltage signal of a touch channel in which the electrode is located, so that the controller 101 subsequently determines, based on the voltage signal of each touch channel in the touch region A, coordinates of a location of contact between a stylus and the touch panel 10.

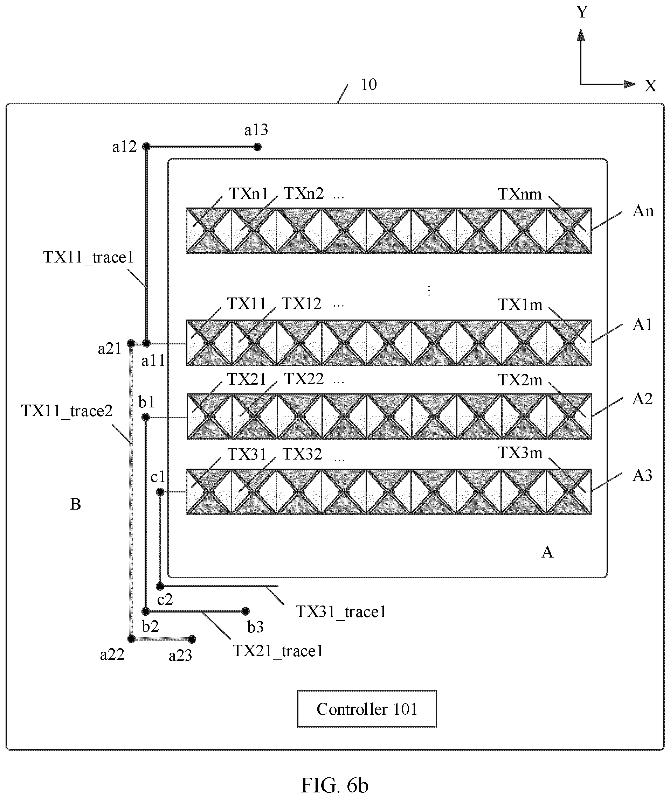

It should be noted that a first end and a second end of the first electrode may be a same end, that is, the second end of the first electrode is the first end of the first electrode. For details, refer to a diagram of a planar structure of the touch panel shown in FIG. 6b.

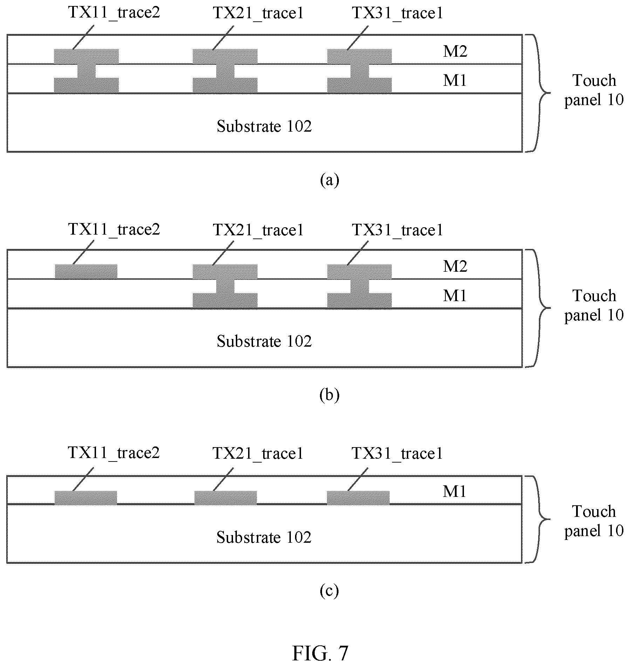

To further illustrate location relationships between the second-end trace TX11_trace2 of the first electrode TX11 and the first-end trace TX21_trace1 of the second electrode TX21 in FIG. 6a and FIG. 6b, the following provides descriptions with reference to diagrams of a sectional structure of the touch panel shown in FIG. 7. Specifically, a plane that is perpendicular to the bottom surface of the touch panel 10 and that is parallel to the first direction X is used as a cross-sectional plane, and the touch panel is cut in a trace region in which c1 to c2 are located, to obtain the diagrams of the sectional structure of the touch panel shown in FIG. 7. As shown in (a) in FIG. 7, the touch panel 10 includes a substrate 102, a first trace layer M1, and a second trace layer M2. The second-end trace TX11_trace2 of the first electrode TX11, the first-end trace TX21_trace1 of the second electrode TX21, and the first-end trace TX3 1_trace1 of the third electrode TX31 are all located at a trace layer M including the first trace layer M1 and the second trace layer M2. In this case, it can be learned that the second-end trace TX11_trace2 of the first electrode TX11, the first-end trace TX21_trace1 of the second electrode TX21, and the first-end trace TX31_trace1 of the third electrode TX31 all use a double-layer-trace structure. The second-end trace TX11_trace2 of the first electrode TX11 is located on the just left side of the first-end trace TX21_trace1 of the second electrode TX21, the first-end trace TX3 1_trace1 of the third electrode TX31 is located on the just right side of the first-end trace TX21_trace1 of the second electrode TX21, the vertical projection of the second-end trace TX111_trace2 of the first electrode TX11 on the bottom surface of the touch panel 10 (namely, a bottom surface of the substrate 102) does not overlap the vertical projection of the first-end trace TX21_trace1 of the second electrode TX21 on the bottom surface of the substrate 102.

It should be noted that, in the sectional diagram of the touch panel shown in (a) in FIG. 7, an example in which the trace of the electrode is a double-layer trace is used for description. Optionally, in this application, the trace of the electrode may be a double-layer trace, or may be a single-layer trace, or may be a combination of a single-layer trace and a double-layer trace. Specifically, the first-end traces of all the electrodes are double-layer traces, and the second-end trace TX11_trace2 of the first electrode TX11 is a single-layer trace. The first-end traces of all the electrodes and the second-end trace TX11_trace2 of the first electrode TX11 are all single-layer traces. For example, as shown in (b) in FIG. 7, the second-end trace TX11_trace2 of the first electrode TX11 is a single-layer trace, and both the first-end trace TX21_trace1 of the second electrode TX21 and the first-end trace TX3 1_trace1 of the third electrode TX31 are double-layer traces. As shown in (c) in FIG. 7, the second-end trace TX11_trace2 of the first electrode TX11, the first-end trace TX21_trace1 of the second electrode TX21, and the first-end trace TX31_trace1 of the third electrode TX31 are all single-layer traces.

It can be learned from FIG. 7 that, compared with the solution shown in (b) in FIG.7 that the second-end trace TX11_trace2 of the first electrode TX11 in the touch panel 10 is a different single-layer trace from the first-end trace TX21_trace1 of the second electrode TX21, in the solution shown in (a) in FIG.7 that the second-end trace TX11_trace2 of the first electrode TX11 in the touch panel 10 is a same double-layer trace as the first-end trace TX21_trace1 of the second electrode TX21, an orthogonal projection area between the second-end trace TX11_trace2 of the first electrode TX11 and the first-end trace TX21_trace1 of the second electrode TX21 can be increased as much as possible, thereby facilitating compensation for the capacitance value between the traces. The traces in the touch panel 10 shown in (c) in FIG. 7 are all in a single-layer-trace structure. This facilitates a light and thin design of the touch panel 10 and reduces costs of the touch panel 10. In addition, currently, a double-layer-trace structure is mainly used for the trace in the touch panel 10. Therefore, applicability of the touch panel 10 shown in (a) to (c) in FIG. 7 is sorted in descending order as follows: the touch panel 10 shown in (a) in FIG. 7, the touch panel 10 shown in (b) in FIG. 7, and the touch panel 10 shown in (c) in FIG. 7.

In this embodiment of this application, the capacitance value between the trace of the first electrode and the first-end trace TX21_trace1 of the second electrode TX21 in the touch panel 10 is increased by adding the second-end trace TX11_trace2 of the first electrode TX11 whose projection on the first-end trace TX21_trace1 of the second electrode TX21 overlaps the first-end trace TX21_trace1 of the second electrode TX21 to the left side or right side of the first-end trace TX21_trace1 of the second electrode TX21, that is, compensating for the capacitance between the traces. In addition, because channel spacings between any two adjacent touch channels in this embodiment are the same, it may be learned that the capacitance value between the first electrode and the trace of the first electrode and the second electrode and the first-end trace of the second electrode is increased and is approximate to the capacitance value between the second electrode and the first-end trace of the second electrode and the third electrode and the first-end trace of the third electrode, to resolve a jitter problem caused, when a user draws a line on the touch panel 10 with a capacitive stylus, by a routing manner in which directions of first-end traces of two electrodes of a same type in two adjacent touch channels are opposite, thereby improving accuracy of drawing a line with the capacitive stylus, and improving user experience of using the capacitive stylus by the user.

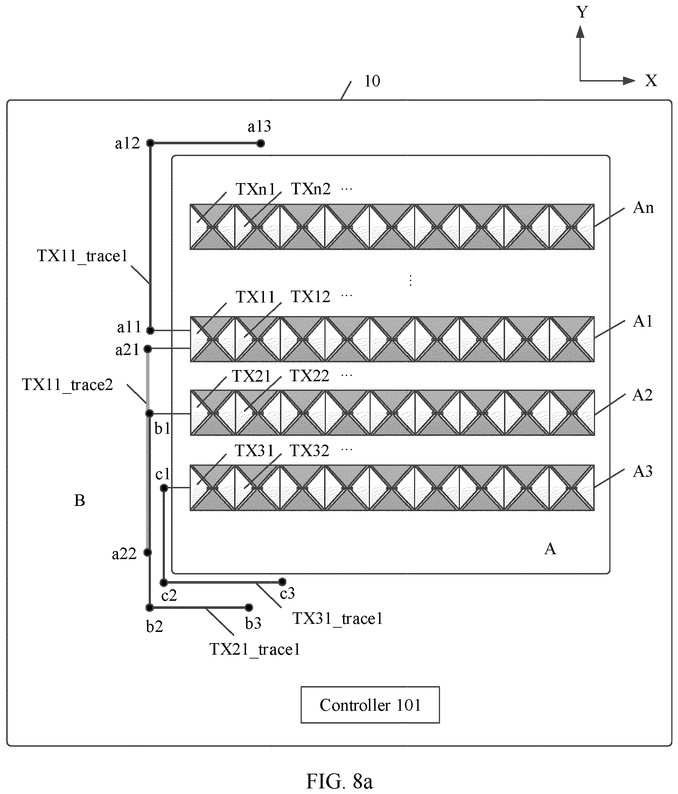

For example, FIG. 8a is a diagram of another planar structure of a touch panel according to an embodiment of this application. As shown in FIG. 8a, compared with the touch panel 10 shown in FIG. 6a, in a touch panel 10 shown in FIG. 8a, a location of a second-end trace TX11_trace2 of a first electrode TX11 shown in FIG. 8a is different from a location of the second-end trace TX11_trace2 of the first electrode TX11 shown in FIG. 6a. Specifically, a vertical projection of the second-end trace TX111_trace2 of the first electrode TX11 on a bottom surface of the touch panel 10 overlaps a vertical projection of a first-end trace TX21_trace1 of a second electrode TX21 on the bottom surface of the touch panel 10. In this embodiment, the vertical projection of the second-end trace TX11_trace2 of the first electrode TX11 on the bottom surface of the touch panel 10 is located below the vertical projection of the first-end trace TX21_trace1 of the second electrode TX21 on the bottom surface of the touch panel 10. Specifically, when it is ensured that the vertical projection of the second-end trace TX11_trace2 of the first electrode TX11 on the bottom surface of the touch panel 10 overlaps the vertical projection of the first-end trace TX21_trace1 of the second electrode TX21 on the bottom surface of the touch panel 10, in a direction perpendicular to the bottom surface of the touch panel 10, the second-end trace TX11_trace2 of the first electrode TX11 may be located on the just lower side, the lower left side, or the lower right side of the first-end trace TX21_trace1 of the second electrode TX21. Optionally, the vertical projection of the second-end trace TX11_trace2 of the first electrode TX11 on the bottom surface of the touch panel 10 is located above the vertical projection of the first-end trace TX21_trace1 of the second electrode TX21 on the bottom surface of the touch panel 10. Specifically, when it is ensured that the vertical projection of the second-end trace TX11_trace2 of the first electrode TX11 on the bottom surface of the touch panel 10 overlaps the vertical projection of the first-end trace TX21_trace1 of the second electrode TX21 on the bottom surface of the touch panel 10, in a direction perpendicular to the bottom surface of the touch panel 10, the second-end trace TX11_trace2 of the first electrode TX11 may be located on the just upper side, the upper left side, or upper right side of the first-end trace TX21_trace1 of the second electrode TX21.

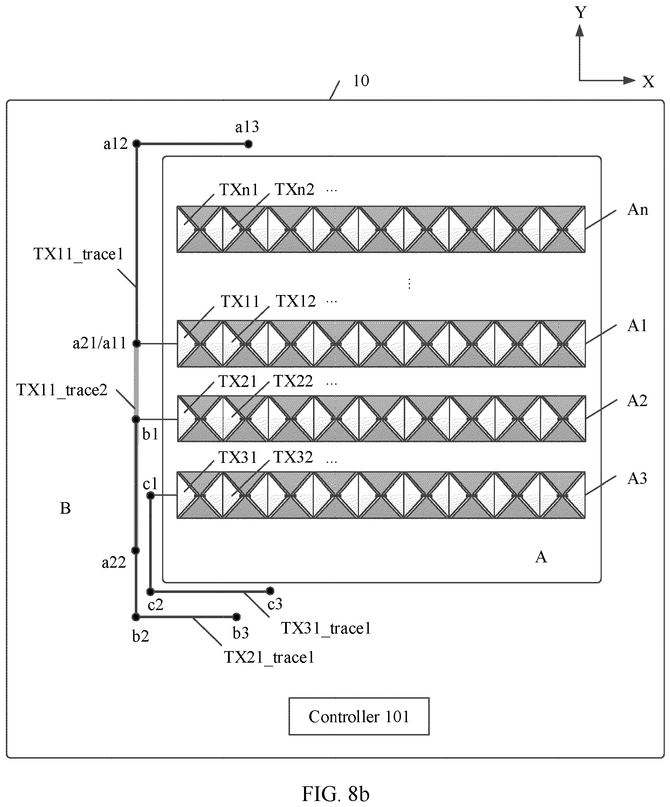

In this embodiment, for descriptions of parts of the touch panel 10 other than the location of the second-end trace TX11_trace2 of the first electrode TX11, refer to the descriptions of the corresponding parts of the touch panel 10 shown in FIG. 6a. Details are not described herein again. It should be noted that a first end and a second end of the first electrode may be a same end, that is, the second end of the first electrode is the first end of the first electrode. For details, refer to a diagram of a planar structure of the touch panel 10 shown in FIG. 8b.

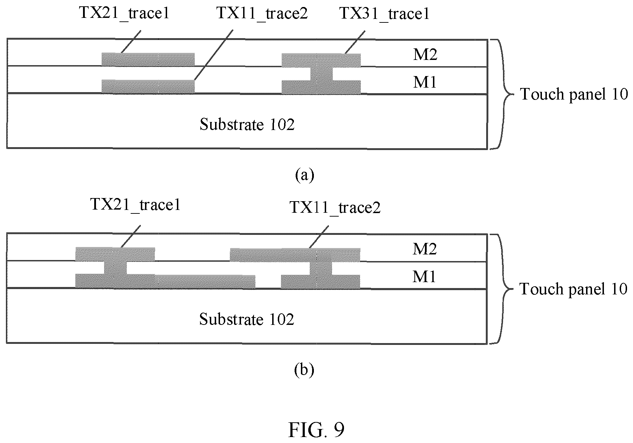

To further illustrate location relationships between the second-end trace TX11_trace2 of the first electrode TX11 and the first-end trace TX21_trace1 of the second electrode TX21 in FIG. 8a and FIG. 8b, the following provides descriptions with reference to diagrams of a sectional structure of the touch panel shown in FIG. 9.

Specifically, a plane that is perpendicular to the bottom surface of the touch panel 10 and that is parallel to a first direction X is used as a cross-sectional plane, and the touch panel is cut in a region that includes the second-end trace TX11_trace2 of the first electrode TX11, the first-end trace TX21_trace1 of the second electrode TX21, and the first-end trace TX3 1_trace1 of the third electrode TX31, to obtain a diagram of the sectional structure of the touch panel shown in (a) in FIG. 9. As shown in (a) in FIG. 9, the touch panel 10 includes a substrate 102, a first trace layer M1, and a second trace layer M2. The second-end trace TX11_trace2 of the first electrode TX11 is located at the first trace layer M1, and the first-end trace TX21_trace1 of the second electrode TX21 is located at the second trace layer M2, the first-end trace TX31_trace1 of the third electrode TX31 is located at the first trace layer M1 and the second trace layer M2. Specifically, in the direction perpendicular to the bottom surface of the substrate 102, the second-end trace TX111_trace2 of the first electrode TX11 is located below the first-end trace TX21_trace1 of the second electrode TX21, and the vertical projection of the second-end trace TX11_trace2 of the first electrode TX11 on the bottom surface of the substrate 102 overlaps the vertical projection of the first-end trace TX21_trace1 of the second electrode TX21 on the bottom surface of the substrate 102.

Further, the plane that is perpendicular to the bottom surface of the touch panel 10 and that is parallel to a second direction Y is used as a cross-sectional plane, and the touch panel is cut in a region that includes both the second-end trace TX11_trace2 of the first electrode TX11 and the first-end trace TX21_trace1 of the second electrode TX21, to obtain a diagram of the sectional structure of the touch panel shown in (b) in FIG. 9. As shown in (b) in FIG. 9, both the second-end trace TX111_trace2 of the first electrode TX11 and the first-end trace TX21_trace1 of the second electrode TX21 are located at a trace layer M including the first trace layer M1 and the second trace layer M2, and the vertical projection of the second-end trace TX11_trace2 of the first electrode TX11 on the bottom surface of the substrate 102 overlaps the vertical projection of the first-end trace TX21_trace1 of the second electrode TX21 on the bottom surface of the substrate 102.

In this embodiment of this application, a capacitance value between the trace of the first electrode and the first-end trace TX21_trace1 of the second electrode TX21 in the touch panel 10 is increased by adding the second-end trace TX11_trace2 of the first electrode TX11 whose projection on the first-end trace TX21_trace1 of the second electrode TX21 overlaps the first-end trace TX21_trace1 of the second electrode TX21 to the upper side or lower side of the first-end trace TX21_trace1 of the second electrode TX21, that is, compensating for capacitance between the traces. In addition, because channel spacings between any two adjacent touch channels in this embodiment are the same, it may be learned that a capacitance value between the first electrode and the trace of the first electrode and the second electrode and the first-end trace of the second electrode is increased and is approximate to a capacitance value between the second electrode and the first-end trace of the second electrode and the third electrode and the first-end trace of the third electrode, to resolve a jitter problem caused, when a user draws a line on the touch panel 10 with a capacitive stylus, by a routing manner in which directions of first-end traces of two electrodes of a same type in two adjacent touch channels are opposite, thereby improving accuracy of drawing a line with the capacitive stylus, and improving user experience of using the capacitive stylus by the user.

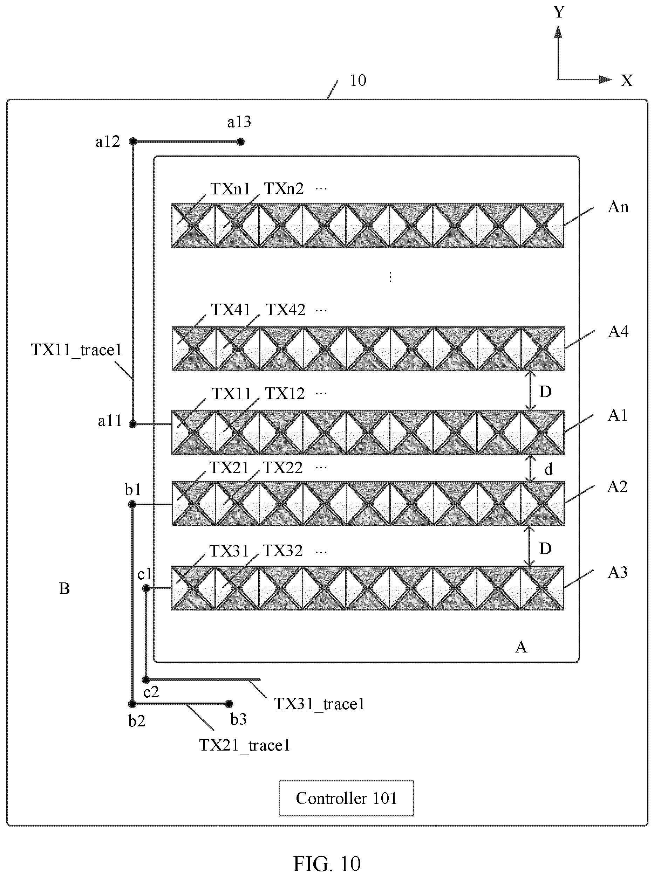

FIG. 10 is a diagram of another planar structure of a touch panel according to an embodiment of this application. As shown in FIG. 10, a touch panel includes a touch region A and a trace region B that is located outside the touch region A and that is disposed along an edge of the touch region A.

A plurality of touch channels that are spaced from each other and located on a same plane parallel to a bottom surface of the touch panel 10 and that extend in a first direction X are disposed in the touch region A, namely, a first touch channel A1, a second touch channel A2, a third touch channel A3, ..., and an n^{th} touch channel An. A first-end trace TX11_trace1 of a first electrode TX11, a first-end trace TX21_trace1 of a second electrode TX21, and a first-end trace TX31_trace1 of a third electrode TX31 that are represented by using black thick lines are disposed in the trace region B. Herein, for specific descriptions of each of the n touch channels, the first-end trace TX11_trace1 of the first electrode TX11, the first-end trace TX21_trace1 of the second electrode TX21, and the first-end trace TX31_trace1 of the third electrode TX31, refer to the descriptions of the corresponding parts of the touch panel 10 in FIG. 6a. Details are not described herein again.

A first channel spacing d between the first touch channel A1 and the second touch channel A2 is less than a second channel spacing D between the second touch channel A2 and the third touch channel A3.

A value of the first channel spacing d is determined by a capacitance value between the first-end trace TX3 1_trace1 of the third electrode TX31 and the first-end trace TX21_trace1 of the second electrode TX21. Specifically, the value of the first channel spacing d is determined by a capacitance value C2'-C11'. C2' is a capacitance value between the second electrode TX21 and the first-end trace TX21_trace1 of the second electrode TX21 and the third electrode TX31 and the first-end trace TX31_trace1 of the third electrode TX31, namely, a sum of the capacitance value C21' between the first-end trace TX21_trace1 of the second electrode TX21 and the first-end trace TX31_trace1 of the third electrode TX31 and a capacitance value C22' between the second electrode TX21 and the third electrode TX31. C11' is a capacitance value between the first-end trace TX11_trace1 of the first electrode TX11 and the first-end trace TX21_trace1 of the second electrode TX21.

The first channel spacing d is negatively correlated with the capacitance value C2'-C11'. Based on this, a capacitance value corresponding to the first channel spacing d may be set to C2'-C11', so that a capacitance value between the first electrode and the first-end trace of the first electrode and the second electrode and the first-end trace of the second electrode is equal to the capacitance value between the second electrode and the first-end trace of the second electrode and the third electrode and the first-end trace of the third electrode.

In this embodiment of this application, an electrode spacing between the first electrode and the second electrode in the touch panel 10 is shortened by shortening the first channel spacing, so that a capacitance value between the first electrode and the second electrode is increased, and the capacitance value between the first electrode and the first-end trace of the first electrode and the second electrode and the first-end trace of the second electrode is increased and is approximate to the capacitance value between the second electrode and the first-end trace of the second electrode and the third electrode and the first-end trace of the third electrode, to resolve a jitter problem caused, when a user draws a line on the touch panel 10 with a capacitive stylus, by a routing manner in which directions of first-end traces of two electrodes of a same type in two adjacent touch channels are opposite, thereby improving accuracy of drawing a line with the capacitive stylus, and improving user experience of using the capacitive stylus by the user.

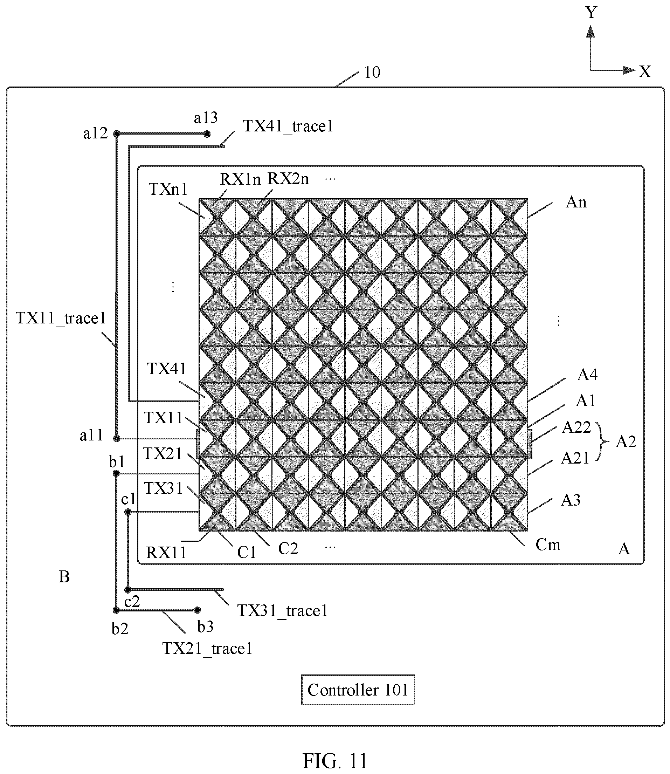

FIG. 11 is a diagram of another planar structure of a touch panel according to an embodiment of this application. As shown in FIG. 11, a touch panel includes a touch region A and a trace region B that is located outside the touch region A and that is disposed along an edge of the touch region A.

A plurality of touch channels that are spaced from each other and that extend in a first direction X are disposed in the touch region A, namely, a first touch channel A1, a second touch channel A2, a third touch channel A3, ..., and an n^{th} touch channel An. Both the first touch channel A1 and the third touch channel A3 are adjacent to the second touch channel A2. The first touch channel A1 includes a plurality of first electrodes, for example, a first electrode TX11, a first electrode TX12, ..., and the like. The second touch channel A2 includes a plurality of second electrodes, for example, a second electrode TX21, a second electrode TX22, ..., and the like. The third touch channel A3 includes a plurality of third electrodes, for example, a third electrode TX31, a third electrode TX32, ..., and the like. The first electrode, the second electrode, and the third electrode are electrodes of a same type. In this embodiment, an example in which the first electrode, the second electrode, and the third electrode are all transmit electrodes is used for description.

A plurality of touch channels that are spaced from each other and that extend in a second direction Y are further disposed in the touch region A, namely, a first touch channel C1, a second touch channel C2, ..., and an m^{th} touch channel Cm. The first direction X is perpendicular to the second direction Y. Each of the m touch channels from the first touch channel C1 to the second touch channel Cm includes a plurality of receive electrodes. For example, the first touch channel C1 includes a plurality of receive electrodes, for example, a receive electrode RX11, ..., and a receive electrode RX1n. In other words, the receive electrode RX11, ..., and the receive electrode RX1n that extend and are distributed in the second direction Y form the touch channel C1. By analogy, other (m-1) touch channels extending in the second direction Y may be obtained. The foregoing receive electrodes correspond to gray regions in hourglass shape shown in FIG. 11. Specific shapes of the receive electrode and the transmit electrode are not limited in this application. In addition, the n touch channels extending in the first direction X and the m touch channels extending in the second direction Y are all located in a same plane.

A first-end trace TX11_trace1 of the first electrode TX11, a first-end trace TX21_trace1 of the second electrode TX21, and a first-end trace TX31_trace1 of the third electrode TX31 are disposed in the trace region B, and the first-end trace TX11_trace1 of the first electrode TX11, the first-end trace TX21_trace1 of the second electrode TX21, and the first-end trace TX3 1_trace1 of the third electrode TX31 are all configured to connect to a controller 101 of the touch panel 10.

A part of the first-end trace TX111_trace1 of the first electrode TX11 is parallel to a part of the first-end trace TX21_trace1 of the second electrode TX21, and a vertical projection of the first-end trace TX11_trace1 of the first electrode TX11 on a bottom surface of the touch panel 10 does not overlap a vertical projection of the first-end trace TX21_trace1 of the second electrode TX21 on the bottom surface of the touch panel 10. A part of the first-end trace TX31_trace1 of the third electrode TX31 is parallel to a part of the first-end trace TX21_trace1 of the second electrode TX21, and a vertical projection of the first-end trace TX3 1_trace1 of the third electrode TX31 on the bottom surface of the touch panel 10 overlaps the vertical projection of the first-end trace TX21_trace1 of the second electrode TX21 on the bottom surface of the touch panel 10.

The second touch channel A2 includes two parts: a touch channel A21 and a touch channel A22. The touch channel A21, the first touch channel A1, the third touch channel A3, ..., and the n^{th} touch channel An are located in a same plane parallel to the bottom surface of the touch panel 10. The touch channel A22 is located below the plane in which the first touch channel A1 and the touch channel A21 are located, and there is an overlapping region between a vertical projection of the touch channel A22 on the bottom surface perpendicular to the touch panel 10 and a vertical projection of the first touch channel A1 on the bottom surface perpendicular to the touch panel 10. Specifically, the touch channel A22 is obtained by extending the touch channel A21 below the first touch channel A1 in a punching manner. Optionally, the touch channel A22 may alternatively be located above the plane in which the first touch channel A1 and the touch channel A21 are located. An area of the overlapping region is determined by a capacitance value between the first-end trace TX21_trace1 of the second electrode TX21 and the first-end trace TX31_trace1 of the third electrode TX31. Specifically, the area of the overlapping region is determined by a capacitance value C2'-C11'. C2' is a capacitance value between the second electrode and the first-end trace of the second electrode and the third electrode and the first-end trace of the third electrode, namely, a sum of the capacitance value C21' between the first-end trace TX21_trace1 of the second electrode TX21 and the first-end trace TX31_trace1 of the third electrode TX31 and a capacitance value C22' between the second electrode and the third electrode. C11' is a capacitance value between the first-end trace TX11_trace1 of the first electrode TX11 and the first-end trace TX21_trace1 of the second electrode TX21.

The area of the overlapping region is positively correlated with the capacitance value C2'-C11'. Based on this, a capacitance value corresponding to the area of the overlapping region may be set to C2'-C11', so that a capacitance value between the first electrode TX11 and the first-end trace TX11_trace1 of the first electrode TX11 and the second electrode TX21 and the first-end trace TX21_trace1 of the second electrode TX21 is equal to the capacitance value between the second electrode TX21 and the first-end trace TX21_trace1 of the second electrode TX21 and the third electrode TX31 and the first-end trace TX31_trace1 of the third electrode TX31.

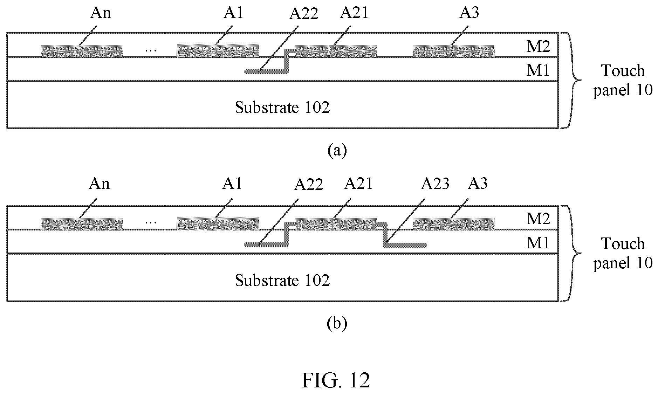

To further illustrate a location relationship between the first touch channel A1 and the second touch channel A2 in FIG. 11, the following provides descriptions with reference to diagrams of a sectional structure of the touch panel shown in FIG. 12. Specifically, a plane that is perpendicular to the bottom surface of the touch panel 10 and that is parallel to the second direction Y is used as a cross-sectional plane, and the touch panel 10 is cut in a region that includes the n touch channels, to obtain a diagram of the sectional structure of the touch panel shown in (a) in FIG. 12. As shown in (a) in FIG. 12, the touch panel 10 includes a substrate 102, a first trace layer M1, and a second trace layer M2. The first touch channel A1, the touch channel A21, the third touch channel A3, ..., and the n^{th} touch channel An are all located at the second trace layer M2, and the touch channel A22 is located at the first trace layer M1. Specifically, in a direction perpendicular to the bottom surface of the substrate 102, a part of the touch channel A22 is located below the first touch channel A1, and there is an overlapping region between a vertical projection of the first touch channel A1 on a bottom surface of the substrate 102 and a vertical projection of the touch channel A22 on the bottom surface of the substrate 102.

It should be noted that, in an actual application scenario, a symmetrical extension manner is usually used to increase an orthogonal projection area between channels. For details, refer to (b) in FIG. 12. As shown in (b) in FIG. 12, in addition to the touch channel A22 that extends below the first touch channel A1, the second touch channel further includes a touch channel A23 that extends below the third touch channel A3.

In this embodiment of this application, an orthogonal projection area between the channels in the touch panel 10 is increased by extending either the first touch channel A1 or the second touch channel A2 above or below the other touch channel of the two touch channels, to increase an orthogonal projection area between the first electrode TX11 and the second electrode TX21, so that a capacitance value between the first electrode TX11 and the second electrode TX21 is increased, and the capacitance value between the first electrode TX11 and the first-end trace TX11_trace1 of the first electrode TX11 and the second electrode TX21 and the first-end trace TX21_trace1 of the second electrode TX21 is increased and is approximate to the capacitance value between the second electrode TX21 and the first-end trace TX21_trace1 of the second electrode TX21 and the third electrode TX31 and the first-end trace TX31_trace1 of the third electrode TX31, to resolve a jitter problem caused, when a user draws a line on the touch panel 10 with a capacitive stylus, by a routing manner in which directions of first-end traces of two electrodes of a same type in two adjacent touch channels are opposite, thereby improving accuracy of drawing a line with the capacitive stylus, and improving user experience of using the capacitive stylus by the user.

Further, in this application, a manner of compensating for capacitance between the traces and shortening a first channel spacing may be used, or a manner of compensating for capacitance between the traces and increasing the orthogonal projection area between the channels may be used, to resolve the jitter problem caused, when the capacitive stylus is used to draw a line on the touch panel 10, by the routing manner in which the directions of the first-end traces of the two electrodes of the same type in the two adjacent touch channels are opposite.

Regardless of whether a vertical projection of a second-end trace TX11_trace2 of the first electrode TX11 on the bottom surface of the touch panel 10 overlaps the vertical projection of the first-end trace TX21_trace1 of the second electrode TX21 on the bottom surface of the touch panel 10, working principles of the touch panel 10 are the same. For ease of description, the following provides descriptions by using an example in which the vertical projection of the second-end trace TX11_trace2 of the first electrode TX11 on the bottom surface of the touch panel 10 does not overlap the vertical projection of the first-end trace TX21_trace1 of the second electrode TX21 on the bottom surface of the touch panel 10.

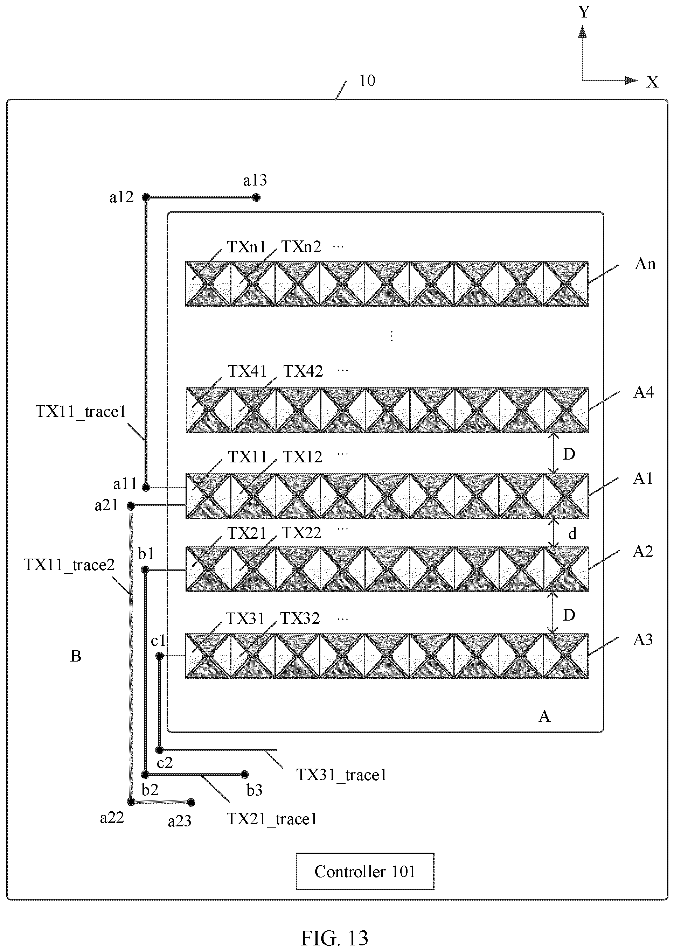

For example, FIG. 13 is a diagram of another planar structure of a touch panel according to an embodiment of this application. As shown in FIG. 13, a touch panel includes a touch region A and a trace region B that is located outside the touch region A and that is disposed along an edge of the touch region A.

A plurality of touch channels that are spaced from each other and that extend in a first direction X are disposed in the touch region A, namely, a first touch channel A1, a second touch channel A2, a third touch channel A3, ..., and an n^{th} touch channel An. The first touch channel A1 is adjacent to the second touch channel A2, and the second touch channel A2 is adjacent to the third touch channel A3. A first channel spacing d between the first touch channel A1 and the second touch channel A2 is less than a second channel spacing D between the second touch channel A2 and the third touch channel.

A first-end trace TX11_trace1 of a first electrode TX11, a first-end trace TX21_trace1 of a second electrode TX21, and a first-end trace TX31_trace1 of a third electrode TX31 that are represented by using black thick lines, and a second-end trace TX11_trace2 that is represented by using a gray thick line are disposed in the trace region B. The first-end trace TX11_trace1 of the first electrode TX11, the first-end trace TX21_trace1 of the second electrode TX21, and the first-end trace TX31_trace1 of the third electrode TX31 are all configured to connect to a controller 101. A vertical projection of the second-end trace TX11_trace2 of the first electrode TX11 on a bottom surface of the touch panel 10 does not overlap a vertical projection of the first-end trace TX21_trace1 of the second electrode TX21 on the bottom surface of the touch panel 10.

A part of the first-end trace TX11_trace1 of the first electrode TX11 is parallel to a part of the first-end trace TX21_trace1 of the second electrode TX21, and a vertical projection of the first-end trace TX11_trace1 of the first electrode TX11 on the bottom surface of the touch panel 10 does not overlap the vertical projection of the first-end trace TX21_trace1 of the second electrode TX21 on the bottom surface of the touch panel 10. A part of the second-end trace TX11_trace2 of the first electrode TX11 is parallel to a part of the first-end trace TX21_trace1 of the second electrode TX21, and the vertical projection of the second-end trace TX11_trace2 of the first electrode TX11 on the bottom surface of the touch panel 10 overlaps the vertical projection of the first-end trace TX21_trace1 of the second electrode TX21 on the bottom surface of the touch panel 10. A part of the first-end trace TX31_trace1 of the third electrode TX31 is parallel to a part of the first-end trace TX21_trace1 of the second electrode TX21, and a vertical projection of the first-end trace TX31_trace1 of the third electrode TX31 on the bottom surface of the touch panel 10 overlaps the vertical projection of the first-end trace TX21_trace1 of the second electrode TX21 on the bottom surface of the touch panel 10. A projection of the second-end trace TX11_trace2 of the first electrode TX11 on the first-end trace TX21_trace1 of the second electrode TX21 overlaps the first-end trace TX21_trace1 of the second electrode TX21.

In this embodiment, a sum of a capacitance value corresponding to a length of a part, overlapping the first-end trace TX21_trace1 of the second electrode TX21, of the projection of the second-end trace TX111_trace2 of the first electrode TX11 on the first-end trace TX21_trace1 of the second electrode TX21 and a capacitance value corresponding to the first channel spacing d is a capacitance value between the second electrode and the first-end trace of the second electrode and the third electrode and the first-end trace of the third electrode. The capacitance value corresponding to the length of the overlapping traces is a capacitance value between the trace of the first electrode and the first-end trace TX21_trace1 of the second electrode TX21, and the capacitance value corresponding to the first channel spacing d is a capacitance value between the first electrode and the second electrode.

The capacitance value corresponding to the length of the overlapping part and the capacitance value corresponding to the first channel spacing d may be obtained by allocating the capacitance value between the second electrode and the first-end trace of the second electrode and the third electrode and the first-end trace of the third electrode based on a preset capacitance value allocation ratio. **In** addition, the length of the overlapping part is positively correlated with the capacitance value corresponding to the length of the overlapping part, and the first channel spacing d is negatively correlated with the capacitance value corresponding to the first channel spacing d. Therefore, the length of the overlapping part and the first channel spacing d may be obtained based on the capacitance value corresponding to the length of the overlapping part and the capacitance value corresponding to the first channel spacing d.

**In** addition, for parts of the touch panel 10 not specifically described in this embodiment, refer to the descriptions of the corresponding parts of the touch panels 10 shown in FIG. 6a and FIG. 10. Details are not described herein again.

**In** this embodiment of this application, in the touch panel 10, the capacitance value between the trace of the first electrode and the first-end trace TX21_trace1 of the second electrode TX21 and the capacitance value between the first electrode and the second electrode are increased by compensating for capacitance between the traces and shortening the first channel spacing, so that a capacitance value between the first electrode and the trace of the first electrode and the second electrode and the first-end trace of the second electrode is increased and is approximate to the capacitance value between the second electrode and the first-end trace of the second electrode and the third electrode and the first-end trace of the third electrode, to resolve a jitter problem caused, when a user draws a line on the touch panel 10 with a capacitive stylus, by a routing manner in which directions of first-end traces of two electrodes of a same type in two adj acent touch channels are opposite, thereby improving accuracy of drawing a line with the capacitive stylus, and improving user experience of using the capacitive stylus by the user.

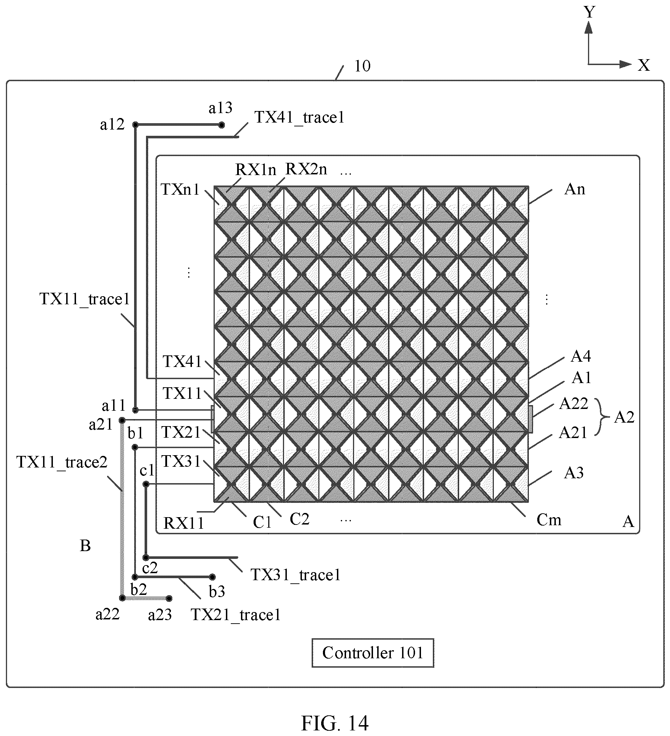

For example, FIG. 14 is a diagram of still another planar structure of a touch panel according to an embodiment of this application. As shown in FIG. 14, a touch panel includes a touch region A and a trace region B that is located outside the touch region A and that is disposed along an edge of the touch region A.

A plurality of touch channels that are spaced from each other and that extend in a first direction X are disposed in the touch region A, namely, a first touch channel A1, a second touch channel A2, a third touch channel A3, ..., and an n^{th} touch channel An. The first touch channel A1 is adjacent to the second touch channel A2, and the second touch channel A2 is adjacent to the third touch channel A3.

The second touch channel A2 includes two parts: a touch channel A21 and a touch channel A22. The touch channel A21, the first touch channel A1, the third touch channel A3, ..., and the n^{th} touch channel An are located in a same plane parallel to a bottom surface of the touch panel 10. The touch channel A22 is located below the plane in which the first touch channel A1 and the touch channel A21 are located. In addition, there is an overlapping region between a vertical projection of the touch channel A22 on the bottom surface of the touch panel 10 and a vertical projection of the first touch channel A1 on the bottom surface of the touch panel 10. Optionally, the touch channel A22 may alternatively be located above the plane in which the first touch channel A1 and the touch channel A21 are located.

A plurality of touch channels that are spaced from each other and that extend in a second direction Y are further disposed in the touch region A, namely, a first touch channel C1, a second touch channel C2, ..., and an m^{th} touch channel Cm. In addition, the n touch channels extending in the first direction X and the m touch channels extending in the second direction Y are all located in a same plane.

A first-end trace TX11_trace1 of a first electrode TX11, a first-end trace TX21_trace1 of a second electrode TX21, and a first-end trace TX31_trace1 of a third electrode TX31 that are represented by using black thick lines, and a second-end trace TX11_trace2 that is represented by using a gray thick line are disposed in the trace region B. The first-end trace TX11_trace1 of the first electrode TX11, the first-end trace TX21_trace1 of the second electrode TX21, and the first-end trace TX31_trace1 of the third electrode TX31 are all configured to connect to a controller 101. A vertical projection of the second-end trace TX11_trace2 of the first electrode TX11 on the bottom surface of the touch panel 10 does not overlap a vertical projection of the first-end trace TX21_trace1 of the second electrode TX21 on the bottom surface of the touch panel 10.

A part of the first-end trace TX11_trace1 of the first electrode TX11 is parallel to a part of the first-end trace TX21_trace1 of the second electrode TX21, and a vertical projection of the first-end trace TX11_trace1 of the first electrode TX11 on the bottom surface of the touch panel 10 does not overlap the vertical projection of the first-end trace TX21_trace1 of the second electrode TX21 on the bottom surface of the touch panel 10. A part of the second-end trace TX11_trace2 of the first electrode TX11 is parallel to a part of the first-end trace TX21_trace1 of the second electrode TX21, and the vertical projection of the second-end trace TX11_trace2 of the first electrode TX11 on the bottom surface of the touch panel 10 overlaps the vertical projection of the first-end trace TX21_trace1 of the second electrode TX21 on the bottom surface of the touch panel 10. A part of the first-end trace TX31_trace1 of the third electrode TX31 is parallel to a part of the first-end trace TX21_trace1 of the second electrode TX21, and a vertical projection of the first-end trace TX31_trace1 of the third electrode TX31 on the bottom surface of the touch panel 10 overlaps the vertical projection of the first-end trace TX21_trace1 of the second electrode TX21 on the bottom surface of the touch panel 10. A projection of the second-end trace TX11_trace2 of the first electrode TX11 on the first-end trace TX21_trace1 of the second electrode TX21 overlaps the first-end trace TX21_trace 1 of the second electrode TX21.

In this embodiment, a sum of a capacitance value corresponding to a length of a part, overlapping the first-end trace TX21_trace1 of the second electrode TX21, of the projection of the second-end trace TX111_trace2 of the first electrode TX11 on the first-end trace TX21_trace1 of the second electrode TX21 and a capacitance value corresponding to an area of the overlapping region is a capacitance value between the second electrode and the first-end trace of the second electrode and the third electrode and the first-end trace of the third electrode. The capacitance value corresponding to the length of the overlapping part is a capacitance value between the trace of the first electrode and the first-end trace TX21_trace1 of the second electrode TX21, and the capacitance value corresponding to the area of the overlapping region is a capacitance value between the first electrode and the second electrode.

The capacitance value corresponding to the length of the overlapping part and the capacitance value corresponding to the area of the overlapping region may be obtained by allocating the capacitance value between the second electrode and the first-end trace of the second electrode and the third electrode and the first-end trace of the third electrode based on a preset capacitance value allocation ratio. In addition, the length of the overlapping part is positively correlated with the capacitance value corresponding to the length of the overlapping part, and the area of the overlapping region is positively correlated with the capacitance value corresponding to the area of the overlapping region. Therefore, the length of the overlapping part and the area of the overlapping region may be obtained based on the capacitance value corresponding to the length of the overlapping part and the capacitance value corresponding to the area of the overlapping region. In addition, for parts of the touch panel 10 not specifically described in this embodiment, refer to the descriptions of the corresponding parts of the touch panels 10 shown in FIG. 6a and FIG. 11. Details are not described herein again.

In this embodiment of this application, in the touch panel 10, the capacitance value between the trace of the first electrode and the first-end trace TX21_trace1 of the second electrode TX21 and the capacitance value between the first electrode and the second electrode are increased by compensating for capacitance between the traces and increasing an orthogonal projection area between the channels, so that a capacitance value between the first electrode and the trace of the first electrode and the second electrode and the first-end trace of the second electrode is increased and is approximate to the capacitance value between the second electrode and the first-end trace of the second electrode and the third electrode and the first-end trace of the third electrode, to resolve a jitter problem caused, when a user draws a line on the touch panel 10 with a capacitive stylus, by a routing manner in which directions of first-end traces of two electrodes of a same type in two adjacent touch channels are opposite, thereby improving accuracy of drawing a line with the capacitive stylus, and improving user experience of using the capacitive stylus by the user. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A touch panel, wherein the touch panel comprises a touch region and a trace region that is located outside the touch region and that is disposed along an edge of the touch region, wherein
a plurality of touch channels that are spaced from each other and that extend in a first direction are disposed in the touch region, the plurality of touch channels comprise a first touch channel and a second touch channel that are adjacent to each other, the first touch channel comprises a first electrode, the second touch channel comprises a second electrode, and the first electrode and the second electrode are electrodes of a same type; and
a first-end trace and a second-end trace of the first electrode and a first-end trace of the second electrode are disposed in the trace region, both the first-end trace of the first electrode and the first-end trace of the second electrode are configured to connect to a controller of the touch panel, a part of the first-end trace of the first electrode is parallel to a part of the first-end trace of the second electrode, a projection of the first-end trace of the first electrode in the first direction does not overlap a projection of the first-end trace of the second electrode in the first direction, a part of the second-end trace of the first electrode is parallel to a part of the first-end trace of the second electrode, a projection of the second-end trace of the first electrode in the first direction overlaps the projection of the first-end trace of the second electrode in the first direction, and a projection of the second-end trace of the first electrode on the first-end trace of the second electrode overlaps the first-end trace of the second electrode.

2. The touch panel according to claim 1, wherein a vertical projection of the second-end trace of the first electrode on a bottom surface of the touch panel does not overlap a vertical projection of the first-end trace of the second electrode on the bottom surface of the touch panel.

3. The touch panel according to claim 1, wherein a vertical projection of the second-end trace of the first electrode on a bottom surface of the touch panel overlaps a vertical projection of the first-end trace of the second electrode on the bottom surface of the touch panel.

4. The touch panel according to any one of claims 1 to 3, wherein the plurality of touch channels are all located on a same plane parallel to the bottom surface of the touch panel, the plurality of touch channels further comprise a third touch channel, the third touch channel is adjacent to the second touch channel, and a first channel spacing between the first touch channel and the second touch channel is less than a second channel spacing between the second touch channel and the third touch channel.

5. The touch panel according to any one of claims 1 to 3, wherein there is an overlapping region between a vertical projection of the first touch channel on the bottom surface of the touch panel and a vertical projection of the second touch channel on the bottom surface of the touch panel.

6. The touch panel according to any one of claims 1 to 5, wherein the plurality of touch channels further comprise the third touch channel, the third touch channel is adjacent to the second touch channel, the third touch channel comprises a third electrode, and the third electrode and the second electrode are electrodes of a same type; and a first-end trace of the third electrode is further disposed in the trace region, the first-end trace of the third electrode is configured to connect to the controller, a part of the first-end trace of the third electrode is parallel to a part of the first-end trace of the second electrode, and a projection of the first-end trace of the third electrode in the first direction overlaps the projection of the first-end trace of the second electrode in the first direction; and
a length of a part, overlapping the first-end trace of the second electrode, of the projection of the second-end trace of the first electrode on the first-end trace of the second electrode is determined by a capacitance value between the first-end trace of the third electrode and the first-end trace of the second electrode.

7. The touch panel according to any one of claims 1 to 6, wherein the second-end trace of the first electrode is a single-layer trace or a double-layer trace.

8. A touch panel, wherein the touch panel comprises a touch region and a trace region that is located outside the touch region and that is disposed along an edge of the touch region, wherein
a plurality of touch channels that are spaced from each other and located on a same plane parallel to a bottom surface of the touch panel and that extend in a first direction are disposed in the touch region, the plurality of touch channels comprise a first touch channel, a second touch channel, and a third touch channel, both the first touch channel and the third touch channel are adjacent to the second touch channel, the first touch channel comprises a first electrode, the second touch channel comprises a second electrode, and the first electrode and the second electrode are electrodes of a same type;
a first-end trace of the first electrode and a first-end trace of the second electrode are disposed in the trace region, both the first-end trace of the first electrode and the first-end trace of the second electrode are configured to connect to a controller of the touch panel, a part of the first-end trace of the first electrode is parallel to a part of the first-end trace of the second electrode, and a projection of the first-end trace of the first electrode in the first direction does not overlap a projection of the first-end trace of the second electrode in the first direction; and
a first channel spacing between the first touch channel and the second touch channel is less than a second channel spacing between the second touch channel and the third touch channel.

9. The touch panel according to claim 8, wherein the trace region further comprises a second-end trace of the first electrode, a part of the second-end trace of the first electrode is parallel to a part of the first-end trace of the second electrode, a projection of the second-end trace of the first electrode in the first direction overlaps the projection of the first-end trace of the second electrode in the first direction, and a projection of the second-end trace of the first electrode on the first-end trace of the second electrode overlaps the first-end trace of the second electrode.

10. The touch panel according to claim 9, wherein a vertical projection of the second-end trace of the first electrode on the bottom surface of the touch panel does not overlap a vertical projection of the first-end trace of the second electrode on the bottom surface of the touch panel.

11. The touch panel according to claim 9, wherein a vertical projection of the second-end trace of the first electrode on the bottom surface of the touch panel overlaps a vertical projection of the first-end trace of the second electrode on the bottom surface of the touch panel.

12. The touch panel according to any one of claims 8 to 11, wherein the third touch channel comprises a third electrode, and the third electrode and the second electrode are electrodes of a same type; and a first-end trace of the third electrode is further disposed in the trace region, the first-end trace of the third electrode is configured to connect to the controller, a part of the first-end trace of the third electrode is parallel to a part of the first-end trace of the second electrode, and a projection of the first-end trace of the third electrode in the first direction overlaps the projection of the first-end trace of the second electrode in the first direction; and
the first channel spacing is determined by a capacitance value between the first-end trace of the third electrode and the first-end trace of the second electrode.

13. A touch panel, wherein the touch panel comprises a touch region and a trace region that is located outside the touch region and that is disposed along an edge of the touch region, wherein
a plurality of touch channels that are spaced from each other and that extend in a first direction are disposed in the touch region, the plurality of touch channels comprise a first touch channel and a second touch channel that are adjacent to each other, the first touch channel comprises a first electrode, the second touch channel comprises a second electrode, and the first electrode and the second electrode are electrodes of a same type;
a first-end trace of the first electrode and a first-end trace of the second electrode are disposed in the trace region, both the first-end trace of the first electrode and the first-end trace of the second electrode are configured to connect to a controller of the touch panel, a part of the first-end trace of the first electrode is parallel to a part of the first-end trace of the second electrode, and a projection of the first-end trace of the first electrode in the first direction does not overlap a projection of the first-end trace of the second electrode in the first direction; and
there is an overlapping region between a vertical projection of the first touch channel on a bottom surface of the touch panel and a vertical projection of the second touch channel on the bottom surface of the touch panel.

14. The touch panel according to claim 13, wherein the trace region further comprises a second-end trace of the first electrode, a part of the second-end trace of the first electrode is parallel to a part of the first-end trace of the second electrode, a projection of the second-end trace of the first electrode in the first direction overlaps the projection of the first-end trace of the second electrode in the first direction, and a projection of the second-end trace of the first electrode on the first-end trace of the second electrode overlaps the first-end trace of the second electrode.

15. The touch panel according to claim 14, wherein a vertical projection of the second-end trace of the first electrode on the bottom surface of the touch panel does not overlap a vertical projection of the first-end trace of the second electrode on the bottom surface of the touch panel.

16. The touch panel according to claim 14, wherein a vertical projection of the second-end trace of the first electrode on the bottom surface of the touch panel overlaps a vertical projection of the first-end trace of the second electrode on the bottom surface of the touch panel.

17. The touch panel according to any one of claims 13 to 16, wherein the plurality of touch channels further comprise a third touch channel, the third touch channel is adjacent to the second touch channel, the third touch channel comprises a third electrode, and the third electrode and the second electrode are electrodes of a same type; and a first-end trace of the third electrode is further disposed in the trace region, the first-end trace of the third electrode is configured to connect to the controller, a part of the first-end trace of the third electrode is parallel to a part of the first-end trace of the second electrode, and a projection of the first-end trace of the third electrode in the first direction overlaps the projection of the first-end trace of the second electrode in the first direction; and
an area of the overlapping region is determined by a capacitance value between the first-end trace of the second electrode and the first-end trace of the third electrode.

18. A display, wherein the display comprises a display panel and the touch panel according to any one of claims 1 to 17, and the touch panel is located above the display panel.

19. A display, wherein the display comprises a display panel and the touch panel according to any one of claims 1 to 17, and the touch panel is integrated inside the display panel.

20. An electronic device, wherein the electronic device supports a stylus as an input device of the electronic device, and the electronic device comprises a housing and the display according to claim 18 or 19 that is connected to the housing.
